# EUROPEAN PATENT APPLICATION

(11) **EP 4 769 845 A1**
(43) Date of publication of application: **01.07.2026**
(21) Application number: 24895680.7
(22) Date of filing: 24.07.2024
(51) Int. Cl.: H01R 13/631

(54) **ELECTRONIC DEVICE**

(30) Priority: 30.11.2023 CN 202311633231
(71) Applicant: Honor Device Co., Ltd., Shenzhen, Guangdong 518040 (CN)
(72) Inventor: ZHOU, Zhe, Shenzhen, Guangdong 518040 (CN); ZHANG, Bingqing, Shenzhen, Guangdong 518040 (CN); LIU, Xiaogang, Shenzhen, Guangdong 518040 (CN); LIANG, Daixi, Shenzhen, Guangdong 518040 (CN)
(74) Representative: Gill Jennings & Every LLP
(86) International application number: PCT/CN2024/107326
(87) International publication number: WO 2025/112577

(57) **Abstract**

This application provides an electronic device, and relates to the field of electronic device technologies. The electronic device includes a split body and a direction switchable camera. The body is aligned with and connected to, through a first group of connecting members that are disposed, a second group of connecting members disposed on the direction switchable camera, to perform data transmission and supply power, where both the first group of connecting members and the second group of connecting members include a plurality of connecting members, and functions of at least some of the connecting members are the same when alignment and connection are performed; when the first group of connecting members are aligned with and connected to the second group of connecting members based on a first correspondence, the body is connected to the direction switchable camera and the direction switchable camera faces toward a first direction; and when the first group of connecting members are aligned with and connected to the second group of connecting members based on a second correspondence, the body is connected to the direction switchable camera and the direction switchable camera faces toward a second direction. In this application, on a premise that a quantity of configured cameras is limited, a photographing range of the camera can be expanded, more photographing requirements can be satisfied, and a screen-to-body ratio can also be improved.

## Description

This application claims priority to Chinese Patent Application No. 202311633231.1, filed with the China National Intellectual Property Administration on November 30, 2023 and entitled "ELECTRONIC DEVICE", which is incorporated herein by reference in its entirety.

### TECHNICAL FIELD

This application relates to the field of electronic device technologies, and in particular, to an electronic device.

### BACKGROUND

A camera is usually found in a mobile phone, a notebook computer, and the like, and is configured to implement a plurality of functions, such as daily photography and video chat for a user. Using the notebook computer as an example, generally, the camera is mounted on a bezel of a screen of the notebook computer, and faces toward only one fixed direction. In this manner, a photographing range of the camera is limited, utilization is relatively low, and a screen-to-body ratio of the screen is also relatively low.

How to provide a solution in which on a premise that a quantity of configured cameras is limited, the photographing range of the camera is expanded, more photographing requirements are satisfied, and the screen-to-body ratio is improved has become an urgent problem that needs to be resolved.

### SUMMARY

Embodiments of this application provide an electronic device. On a premise that a quantity of configured cameras is limited, PIN definition and a circuit on a side of the camera or a side of a body of the electronic device are modified, to expand a photographing range of the camera, satisfy more photographing requirements, and further improve a screen-to-body ratio.

According to a first aspect, an embodiment of this application provides an electronic device, including a split body and a direction switchable camera. The body is aligned with and connected to, through a first group of connecting members that are disposed, a second group of connecting members disposed on the direction switchable camera, to perform data transmission and supply power, where both the first group of connecting members and the second group of connecting members include a plurality of connecting members, and functions of at least some of the connecting members are the same when alignment and connection are performed; when the first group of connecting members are aligned with and connected to the second group of connecting members based on a first correspondence, the body is connected to the direction switchable camera and the direction switchable camera faces toward a first direction; and when the first group of connecting members are aligned with and connected to the second group of connecting members based on a second correspondence, the body is connected to the direction switchable camera and the direction switchable camera faces toward a second direction.

In this embodiment of this application, when a user needs to perform photographing by using the direction switchable camera, the direction switchable camera may be connected to the body. After being powered-on, the direction switchable camera may be invoked to perform photographing. When a photographing direction or a field of view needs to be switched, the direction switchable camera may be unplugged from the body. After a direction of the direction switchable camera is switched, the direction switchable camera may be enabled again by being reconnected to the body of the electronic device. When the direction switchable camera does not need to be used, the direction switchable camera may be disconnected or unplugged from the body.

Optionally, when the body of the electronic device is disconnected from the direction switchable camera, a storage groove may be further provided on the body of the electronic device, to store the direction switchable camera.

It should be understood that a quantity of the connecting members included in the first group of connecting members and a quantity of the connecting members included in the second group of connecting members may be the same or may be different. It only needs to ensure that a plurality of pairs of the connecting members configured to implement data transmission and supply power are correspondingly conducted when alignment and connection are performed.

It should be further understood that the first direction is different from the second direction. An angle difference between the first direction and the second direction, that is, a rotation angle of the direction switchable camera, which may be designed according to arrangement of the first group of the connecting members and the second group of the connecting members. This is not limited in this embodiment of this application. For example, a difference between the first direction and the second direction may be 60°, 120°, 180°, 270°, or the like.

The first correspondence may also be referred to as a first position correspondence, and the second correspondence may also be referred to as a second position correspondence. The first correspondence is different from the second correspondence.

In this embodiment of this application, the camera and the body of the electronic device are modified to be of a split structure, and the circuit on a side of the camera or the circuit on a side of the body of the electronic device is modified, so that the camera can implement direction switching in a plurality of directions on the body of the electronic device. In this way, the photographing range of the camera may be expanded, more photographing requirements may be satisfied, and the screen-to-body ratio may be further improved.

With reference to the first aspect, in a possible implementation, the quantity of the connecting members included in the first group of connecting members is at least 7. Functions of the plurality of connecting members included in the first group of connecting members are centro-symmetrically distributed, and the plurality of connecting members included in the first group of connecting members are centro-symmetrically arranged. Alternatively, the quantity of the connecting members included in the second group of connecting members is at least 7. Functions of the plurality of connecting members included in the second group of connecting members are centro-symmetrically distributed, and the plurality of connecting members included in the second group of connecting members are centro-symmetrically arranged.

In this embodiment of this application, when the quantity of the first group of connecting members or the quantity of the second group of connecting members is at least 7, definitions of the first group of connecting members on a side of the body of the electronic device, and definitions of the second group of connecting members on a side of the direction switchable camera are modified, so that the first group of connecting members and the second group of connecting members are centro-symmetrically distributed. In this way, when the direction switchable camera is in a forward direction mode and a backward direction mode, connecting members with the same function are aligned with and connected to each other on both the body and the direction switchable camera, so that the direction switchable camera may perform switching photographing in a forward direction and a backward direction on the body of the electronic device, to expand the photographing range, satisfy more photographing requirements, and further improve the screen-to-body ratio.

In addition, when the first group of connecting members are centro-symmetrically distributed, and the quantity of the connecting members included in the second group of connecting members is less than 7, the connecting members in the second group of connecting members and some connecting members in the first group of connecting members are arranged in a same manner. Alternatively, when the second group of connecting members are centro-symmetrically distributed, and the quantity of the connecting members included in the first group of connecting members is less than 7, the connecting members in the first group of connecting members and some connecting members in the second group of connecting members are arranged in a same manner.

With reference to the first aspect, in a possible implementation, when both the quantity of the connecting members included in the first group of connecting members and the quantity of the connecting members included in the second group of connecting members are 7, the first group of connecting members and the second group of connecting members are arranged in a same centro-symmetrical manner, and the centro-symmetric manner is at least one of the following manners: an I-shape, a cellular-shape, an asterisk-shape, and a straight line.

Optionally, the centro-symmetric manner may be an equal-interval manner.

In this embodiment of this application, when the first group of connecting members and the second group of connecting members are arranged in the straight line, a thicknesses of the body of the electronic device and a thicknesses of the direction switchable camera may be designed to be thinner.

With reference to the first aspect, in a possible implementation, when both the quantity of the connecting members included in the first group of connecting members and the quantity of the connecting members included in the second group of connecting members are 5, the electronic device further includes a first switching circuit; when the first switching circuit is disposed in the direction switchable camera, the second group of connecting members are connected to, through the first switching circuit, an ISP included in the direction switchable camera, where the first switching circuit is configured to switch, when the first group of connecting members are aligned with and connected to the second group of connecting members based on the first correspondence and the second correspondence, functions of at least one pair of connecting members that are centro-symmetrically disposed in the second group of connecting members; and when the first switching circuit is disposed in the body of the electronic device, the first group of connecting members are connected to, through the first switching circuit, a processor included in the body, where the first switching circuit is configured to switch, when the first group of connecting members are aligned with and connected to the second group of connecting members based on the first correspondence and the second correspondence, functions of at least one pair of connecting members that are centro-symmetrically disposed in the first group of connecting members.

In this embodiment of this application, when both a quantity of the first group of connecting members and a quantity of the second group of connecting members are 5, the definitions of the first group of connecting members on a side of the body of the electronic device, and the definitions of the second group of connecting members on a side of the direction switchable camera are modified, and the first switching circuit is added between the first group of connecting members on a side of the body of the electronic device and a CPU, or the first switching circuit is added between the second group of connecting members on a side of direction switchable camera and the ISP, so that at least one pair of connecting members that are centro-symmetrically disposed in the first group of connecting members, or at least one pair of connecting members that are centro-symmetrically disposed in the second group of connecting members can be reused after exchange of functions. In this way, both the body and the direction switchable camera that switches between a forward direction and a backward direction can be aligned with and connected to the first group of connecting members and the second group of connecting members that have a same actual function, so that the direction switchable camera on the body of the electronic device can switch photographing directions, to expand the photographing range, satisfy more photographing requirements, and further improve the screen-to-body ratio.

With reference to the first aspect, in a possible implementation, the first group of connecting members and the second group of connecting members are arranged in a same manner, and are arranged at equal intervals in at least one of the following manners: the X-shape, the asterisk-shape, and the straight line.

In this embodiment of this application, when the first group of connecting members and the second group of connecting members are arranged in the straight line, the thicknesses of the body of the electronic device and the thicknesses of the direction switchable camera may be designed to be thinner.

With reference to the first aspect, in a possible implementation, when both the quantity of the connecting members included in the first group of connecting members and the quantity of the connecting members included in the second group of connecting members are 4, the electronic device further includes a second switching circuit; when the second switching circuit is disposed in the direction switchable camera, the second group of connecting members are connected to, through the second switching circuit, the ISP included in the direction switchable camera, where the second switching circuit is configured to switch a function of each connecting member in the second group of connecting members when the first group of connecting members are aligned with and connected to the second group of connecting members based on the first correspondence and the second correspondence; and when the second switching circuit is disposed in the body of the electronic device, the first group of connecting members are connected to, through the second switching circuit, the processor included in the body, where the second switching circuit is configured to switch a function of each connecting member in the first group of connecting members when the first group of connecting members are aligned with and connected to the second group of connecting members based on the first correspondence and the second correspondence.

In this embodiment of this application, when both the quantity of the first group of connecting members and the quantity of the second group of connecting members are 4, the definitions of the first group of connecting members on a side of the body of the electronic device and the definitions of the second group of connecting members on a side of the direction switchable camera are modified, and the second switching circuit is added between the first group of connecting members on a side of the body of the electronic device and the CPU, or the second switching circuit is added between the second group of connecting members on a side of the direction switchable camera and the ISP, so that the first group of connecting members or the second group of connecting members can be reused after exchange of functions. In this way, both the body and the direction switchable camera obtained before and after direction switching can be aligned with and connected to the first group of connecting members and the second group of connecting members that have the same actual function, so that the direction switchable camera on the body of the electronic device can switch a photographing direction, to expand the photographing range, satisfy more photographing requirements, and further improve the screen-to-body ratio.

With reference to the first aspect, in a possible implementation, the first group of connecting members and the second group of connecting members are arranged in the same manner, and are arranged at equal intervals in at least one of the following manners: a rhombus and a straight line.

In this embodiment of this application, when the first group of connecting members and the second group of connecting members are arranged in the straight line, the thicknesses of the body of the electronic device and the thicknesses of the direction switchable camera may be designed to be thinner.

With reference to the first aspect, in a possible implementation, when the first group of connecting members are aligned with and connected to the second group of connecting members, the connecting members having the same function include at least a ground end, a positive electrode of a power supply, a data plus, and a data minus.

In this embodiment of this application, data transmission and power transmission may be performed based on a port defined based on a protocol UBS 2.0. Certainly, the port may alternatively be defined based on another protocol. This is not limited in this embodiment of this application.

With reference to the first aspect, in a possible implementation, the first direction is opposite to the second direction.

In this embodiment of this application, the direction switchable camera may switch between a forward direction and a backward direction.

With reference to the first aspect, in a possible implementation, the direction switchable camera further includes a housing. The second group of connecting members are aligned with and connected to, through a through hole on a bottom surface of the housing, the first group of connecting members disposed on the body; and magnetic connecting members are further disposed on an inner side of the bottom surface of the housing and an upper bezel of the body.

In this embodiment of this application, by disposing the magnetic connecting members or disposing the magnetic connecting members on bezel materials of the housing and the body, the direction switchable camera may be connected to the body of the electronic device through a magnetic attraction manner with a simple structure, featuring an active attraction and an instant connection upon proximity. In addition, because the manner is relatively stable after the connection, which may be applicable to some bumpy scenarios.

With reference to the first aspect, in a possible implementation, the connecting members in the first group of connecting members are Pogo pin interfaces, and the connecting members in the second group of connecting members are Pogo pin headers.

In this embodiment of this application, the direction switchable camera may be aligned with and connected to the body through the Pogo Pin interfaces and the Pogo Pin headers that are disposed, to implement functions such as data communication and power transmission between the Pogo Pin interfaces and the Pogo Pin headers.

An embodiment of this application provides an electronic device. In this embodiment of this application, a camera included in the electronic device and a body of the electronic device are modified to be of split structures, and a circuit on a side of the camera or a circuit on a side of the body of the electronic device is modified, so that when the camera switches directions, an interface connected to the body of the electronic device may be reused. In this way, the camera can switch directions on the body of the electronic device, to expand a photographing range of the camera, and satisfy more photographing requirements.

Optionally, in addition to switching between the forward direction and the backward direction, in this embodiment of this application, the camera may further implement direction switching from a plurality of angles on the body of the electronic device, which significantly expands the photographing range of the camera, satisfies more photographing requirements, and further improves a screen-to-body ratio.

### BRIEF DESCRIPTION OF DRAWINGS

FIG. 1 is an exemplary diagram of an electronic device according to an embodiment of this application;
FIG. 2 is a schematic structural diagram of an electronic device according to an embodiment of this application;
FIG. 3 is a schematic structural diagram of an electronic device according to an embodiment of this application;
FIG. 4 is a schematic structural diagram of a direction switchable camera according to an embodiment of this application;
FIG. 5 is a schematic diagram of a scenario photographed by a direction switchable camera in a forward direction mode according to an embodiment of this application;
FIG. 6 is a schematic diagram of a scenario photographed by a direction switchable camera in a backward direction mode according to an embodiment of this application;
FIG. 7 is a schematic diagram of a circuit in which a direction switchable camera is connected to a body according to an embodiment of this application;
FIG. 8 is another schematic diagram of a circuit in which a direction switchable camera is connected to a body according to an embodiment of this application;
FIG. 9 is another schematic diagram of a circuit in which a direction switchable camera is connected to a body according to an embodiment of this application;
FIG. 10 is another schematic diagram of a circuit in which a direction switchable camera is connected to a body according to an embodiment of this application;
FIG. 11 is another schematic diagram of a circuit in which a direction switchable camera is connected to a body according to an embodiment of this application;
FIG. 12 is another schematic diagram of a circuit in which a direction switchable camera is connected to a body according to an embodiment of this application;
FIG. 13 is another schematic diagram of a circuit in which a direction switchable camera is connected to a body according to an embodiment of this application;
FIG. 14 is another schematic diagram of a circuit in which a direction switchable camera is connected to a body according to an embodiment of this application;
FIG. 15 is another schematic diagram of an electronic device including a direction switchable camera and a body according to an embodiment of this application;
FIG. 16 is a schematic diagram of arrangement of pins on a direction switchable camera according to an embodiment of this application; and
FIG. 17 is a block diagram of a hardware structure of an electronic device according to an embodiment of this application.

### Reference numerals:

100-Electronic device; 101-body; 193-direction switchable camera; 193A-housing; 193B-photographing component; 193C-Pogo Pin header; and 193D-magnetic connecting member

### DESCRIPTION OF EMBODIMENTS

The following describes technical solutions of this application with reference to accompanying drawings.

In descriptions of embodiments of this application, unless otherwise specified, "/" means or. For example, A/B may represent A or B. In this specification, "and/or" describes only an association relationship for associated objects and indicates that three relationships may exist. For example, A and/or B may represent: Only A exists, both A and B exist, and only B exists. In addition, in the descriptions of the embodiments of this application, "a plurality of" represents two or more.

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more of the features.

A camera is usually found in an electronic device, such as a mobile phone and a notebook computer, and is configured to implement a plurality of functions, such as daily photography and video chat for a user.

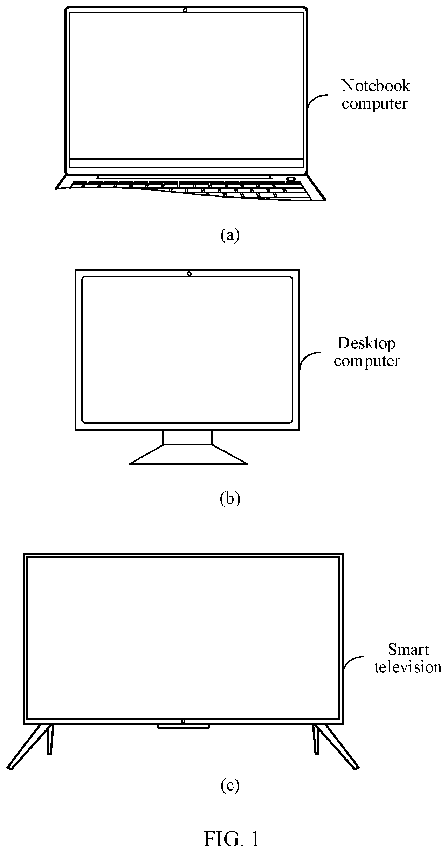

FIG. 1 is a schematic diagram of an electronic device according to an embodiment of this application. Using a notebook computer as an example, generally, the camera is a built-in camera mounted on a bezel of a screen of the notebook computer, and faces only one fixed direction. In this manner, a photographing range of the camera is limited and utilization is relatively low.

For example, as shown in (a) in FIG. 1, the camera is mounted at a central position of a top bezel of the screen of the notebook computer. When the screen is perpendicular to a keyboard, the camera only faces a side of the keyboard. In this way, a photographing requirement for photographing an environment on an opposite side cannot be satisfied; and there is a black border on the screen, causing a relatively low screen-to-body ratio.

In addition, as shown in (b) and (c) in FIG. 1, for other devices such as a desktop computer and a television, in one case, no camera is available, and therefore, an independent camera needs to be externally connected during use; and in another case, the camera is mounted only at a fixed position of the device, and faces only one fixed direction. In this manner, the photographing range of the camera is limited, and the utilization is relatively low.

How to provide a solution in which on a premise that a quantity of configured cameras is limited, the photographing range of the camera is expanded, and more photographing requirements are satisfied has become an urgent problem that needs to be resolved.

In view of this, an embodiment of this application provides an electronic device. In this embodiment of this application, a camera included in the electronic device and a body of the electronic device are modified to be of split structures, and a circuit on a side of the camera or a circuit on a side of the body of the electronic device is modified, so that when the camera switches directions, an interface connected to the body of the electronic device may be reused. In this way, the camera can switch directions on the body of the electronic device, to expand a photographing range of the camera, satisfy more photographing requirements, and further improve a screen-to-body ratio.

Optionally, in addition to switching between a forward direction and a backward direction, in this embodiment of this application, the camera may further implement direction switching from a plurality of angles on the body of the electronic device, which significantly expands the photographing range of the camera and satisfies more photographing requirements.

For example, it is assumed that in the related art, a photographing field of view of the camera ranges from 0° to 180°. In this embodiment of this application, the camera switches between the forward direction and the backward direction on the body of the electronic device, so that the photographing field of view of the camera ranges from 0° to 180° and ranges from 180° to 360°. It can be learnt that, compared with the related art, the electronic device provided in this embodiment of this application expands the photographing range of the camera.

For example, it is assumed that in the related art, the photographing field of view of the camera ranges from 0° to 90°. In this embodiment of this application, the camera implements direction switching from the plurality of angles on the body of the electronic device, so that the photographing field of view of the camera ranges from 0° to 90°, ranges from 90° to 180°, ranges from 180° to 270°, and ranges from 270° to 360°. It can be learnt that, compared with the related art, the electronic device provided in this embodiment of this application expands the photographing range of the camera.

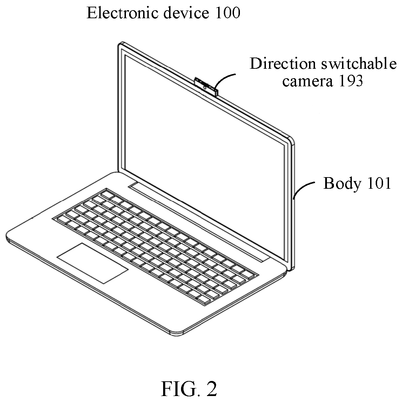

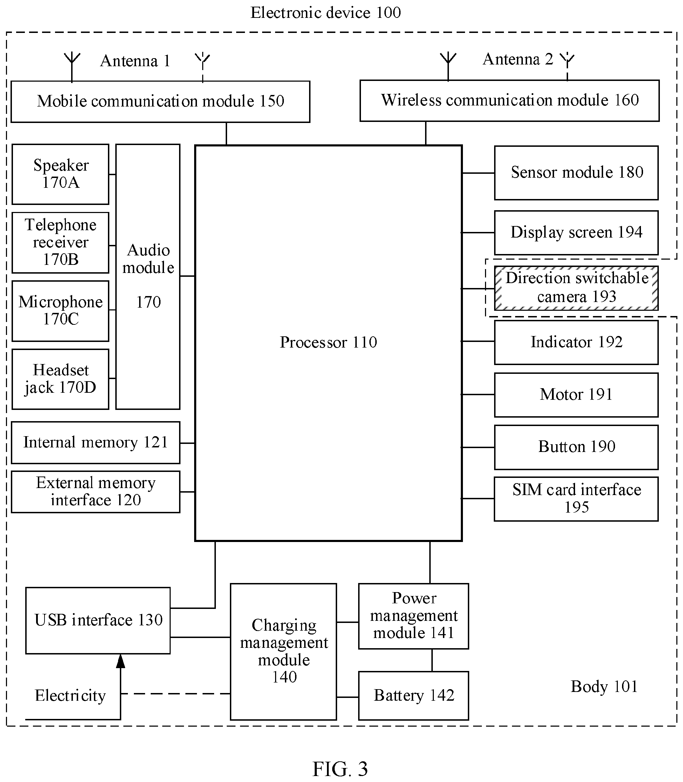

A structure of the electronic device and an applicable photographing scenario that are provided in this embodiment of this application are described in detail below with reference to FIG. 3 to FIG. 7. FIG. 2 is a schematic structural diagram of an electronic device according to an embodiment of this application. FIG. 3 is a schematic diagram of a hardware structure of an electronic device according to an embodiment of this application.

For example, an electronic device 100 involved in this embodiment of this application may be a notebook computer, or may be a mobile phone, a smart screen, a tablet computer, a wearable electronic device, a vehicle-mounted device, an augmented reality (augmented reality, AR) device, a virtual reality (virtual reality, VR) device, an ultra-mobile personal computer (ultra-mobile personal computer, UMPC), a netbook, a personal digital assistant (personal digital assistant, PDA), a projector, and the like. A specific type of the electronic device 100 is not limited in this embodiment of this application.

As shown in FIG. 2, the electronic device 100 provided in this embodiment of this application may include a body 101 and a direction switchable camera 193. FIG. 3 is a diagram of a hardware structure of an electronic device 100 according to an embodiment of this application. Detailed descriptions are provided below.

As shown in FIG. 3, the electronic device 100 may include a body 101 and a direction switchable camera 193. The body 101 of the electronic device may include a processor (central processing unit, CPU) 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a display screen 194, a subscriber identity module (subscriber identity module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It should be noted that, the structure shown in FIG. 3 does not form a specific limitation on the electronic device 100. In some other embodiments of this application, the electronic device 100 may include more or fewer components than those shown in FIG. 3, or the electronic device 100 may include a combination of some components of those shown in FIG. 3, or the electronic device 100 may include subcomponents of some components of those shown in FIG. 3. The components shown in FIG. 3 may be implemented by hardware, software, or a combination of software and hardware.

For example, the processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be separate devices, or may be integrated devices. The controller may generate an operation control signal according to an instruction operation code and a timing sequence signal, to complete control of fetching and executing instructions.

A memory may also be disposed in the processor 110, to store instructions and data. In some embodiments, the memory in the processor 110 is a cache memory. The memory may store an instruction or data that is just used or used cyclically by the processor 110. If the processor 110 needs to use the instruction or the data again, the processor may directly call the instruction or the data from the memory, which avoids repeated access, reduces waiting time of the processor 110, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and a USB interface.

For example, in this embodiment of this application, the processor 110 in the body 101 of the electronic device 100 is connected to the direction switchable camera 193, and is configured to perform data transmission, power transmission, and the like with the direction switchable camera 193. For example, the processor 110 may receive an image signal collected by the direction switchable camera 193 and provide electrical energy for the direction switchable camera 193.

A connection relationship between modules shown in FIG. 3 is only a schematic description, which does not form a limitation on a connection relationship between modules of the body 101 of the electronic device 100. Optionally, the modules of the body 101 of the electronic device 100 may also be combined in a plurality of connecting manners in the foregoing embodiments.

A wireless communication function of the body 101 of the electronic device 100 may be implemented through devices such as the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may be multiplexed to improve antenna utilization. For example, the antenna 1 may be multiplexed as a diversity antenna of a wireless local area network. In some other embodiments, the antenna may be used in combination with a tuning switch.

The body 101 of the electronic device 100 may implement a display function by using the GPU, the display screen 194, the application processor, and the like. The GPU is a microprocessor for image processing, and is connected to the display screen 194 and the application processor. The GPU is configured to perform mathematical and geometric calculations, and is configured to render graphics. The processor 110 may include one or more GPUs and execute program instructions to generate or change display information.

The display screen 194 may be configured to display an image or a video.

Optionally, the display screen 194 may be configured to display the image or the video. The display screen 194 includes a display panel. The display panel may be a liquid crystal display (liquid crystal display, LCD) screen, an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light-emitting diode (quantum dot light-emitting diode, QLED). In some embodiments, the electronic device 100 may include 1 or N display screens 194. N is a positive integer greater than 1.

For example, the digital signal processor is configured to process a digital signal, and in addition to a digital image signal, the digital signal processor may be further configured to process another digital signal. For example, when the electronic device 100 performs frequency selection, the digital signal processor is configured to perform Fourier transform and the like on frequency energy.

For example, the video codec is configured to compress or decompress a digital video. The electronic device 100 may support one or more video codecs. In this way, the body 101 of the electronic device 100 may play or record videos in a plurality of encoding formats, for example, a moving picture experts group (moving picture experts group, MPEG) 1, an MPEG 2, an MPEG 3, and an MPEG 4.

The structure of the body 101 of the electronic device 100 is described in detail above. An internal structure of the direction switchable camera 193 and a connecting manner between the body 101 and the direction switchable camera 193 are described below.

For example, in this embodiment of this application, the body 101 of the electronic device 100 and the direction switchable camera 193 are of split structures. In other words, the direction switchable camera 193 is not a built-in camera, and may be separated from the body 101 of the electronic device 100, or may be connected to the body 101. A specific connecting manner may be set according to a requirement. This is not limited in this application.

For example, in this embodiment of this application, when the body 101 of the electronic device 100 is connected to the direction switchable camera 193, the electronic device 100 may implement a photographing function by using the direction switchable camera 193, and the video codec disposed in the body 101 of the electronic device 100, the GPU, the display screen 194, the application processor, and the like.

For example, in this embodiment of this application, the direction switchable camera 193 is configured to capture a static image or a video. The direction switchable camera 193 may be enabled through trigger of an application program instruction, to implement a photographing function, such as photographing and obtaining an image of any scenario. In this embodiment of this application, the direction switchable camera 193 may include a housing 193A, and the housing 193A includes photographing components 193B, such as an imaging lens, a filter, a photosensitive element (which may also be referred to as an image sensor), an ISP, and the like.

For example, light emitted or reflected by an object enters the imaging lens, passes through the filter, and is finally converged on the photosensitive element. The imaging lens is mainly configured to converge and image light emitted or reflected by all objects (which may also be referred to as a to-be-photographed scenario and a target scenario, and may also be understood as a scenario image expected to be photographed by a user) in an angle of view for photographing. The filter is mainly configured to filter redundant light waves (for example, light waves other than visible light, such as infrared light) in light. The photosensitive element may be a charge-coupled device (charge-coupled device, CCD) or a complementary metal-oxide-semiconductor (complementary metal-oxide-semiconductor, CMOS) phototransistor. The photosensitive element is mainly configured to convert a received optical signal into an electrical signal through optical-to-electrical conversion, and then transfers the electrical signal to the ISP, to convert the electrical signal into the digital image signal. The ISP outputs the digital image signal to the DSP of the body 101 of the electronic device 100 for processing. The DSP converts the digital image signal into the image signal in a standard format such as an RGB format or a YUV format.

For example, the ISP is configured to process data fed back by the photosensitive element. For example, when photographing is performed, a shutter is enabled. Light is transferred to the photosensitive element through the imaging lens, and the optical signal is converted into the electrical signal. The photosensitive element transfers the electrical signal to the ISP for processing, and the electrical signal is converted into an image visible to a naked eye. The ISP may optimize an algorithm for noise, brightness, and a color of the image, and may further optimize parameters, such as exposure and a color temperature of a photographing scenario. In this embodiment of this application, the ISP may be disposed in the direction switchable camera 193. In addition, a clock signal and an original data signal are transmitted between the photosensitive element and the ISP based on an MIPI protocol.

Optionally, the imaging lens may include at least one of the following lens: a standard lens, a wide-angle lens, a fisheye lens, a long-focus lens, a macro lens, a depth of field lens, and the like. This is not limited in this embodiment of this application.

Optionally, a laser focus module and/or a fill light may be further disposed in the direction switchable camera 193.

Optionally, the electronic device 100 may include at least one of the foregoing direction switchable cameras 193, and certainly, may further include another camera such as the built-in camera. This is not limited in this embodiment of this application.

Optionally, when the body 101 of the electronic device 100 is disconnected from the direction switchable camera 193, a storage groove may be further provided on the body 101 of the electronic device 100, to store the direction switchable camera 193.

In this embodiment of this application, with reference to structures of the body 101 and the direction switchable camera 193 described above, when a user needs to perform photographing by using the direction switchable camera 193, the direction switchable camera 193 may be connected to the body 101. After being powered-on, the direction switchable camera 193 may be invoked to perform photographing. When a photographing direction or a field of view needs to be switched, the direction switchable camera 193 may be unplugged from the body 101. After a direction of the direction switchable camera 193 is switched, the direction switchable camera 193 may be enabled again by being reconnected to the body 101 of the electronic device 100. However, when the direction switchable camera 193 does not need to be used, the direction switchable camera 193 may be disconnected or unplugged from the body 101.

Based on the foregoing operating manner, in this embodiment of this application, the direction switchable camera 193 may be connected to the body 101 of the electronic device 100 by using a connector (connector).

For example, the camera may be connected to the body 101 of the electronic device 100 in a plugging and unplugging manner or in a manner in which a header contacts with an interface. For example, the header and the interface may be a Pogo Pin header and a Pogo Pin interface. Certainly, the camera may alternatively be connected to the body 101 of the electronic device 100 through an interface of another type. This is not limited in this application.

Using the notebook computer shown in FIG. 2 as an example, the direction switchable camera 193 may be connected to the body 101 of the electronic device 100 in a manner in which the Pogo Pin header contacts with and the Pogo Pin interface, that is, a connector includes the Pogo Pin header and the Pogo Pin interface.

For example, the Pogo Pin header may be disposed on a side of the direction switchable camera 193, and the Pogo Pin interface may be disposed on the body 101 of the electronic device 100. It should be noted that the Pogo Pin header is a spring probe formed by three basic components, namely, a pin shaft, a spring, and a pin tube. The Pogo Pin interface refers to a connecting interface matching the Pogo Pin header. The Pogo Pin interface and the Pogo Pin header are usually disposed in pairs with a same quantity. In this embodiment of this application, the direction switchable camera 193 may be aligned with and connected to the body 101 through the Pogo Pin interface and the Pogo Pin header that are disposed, to implement functions such as data communication and power transmission between the direction switchable camera 193 and the body 101.

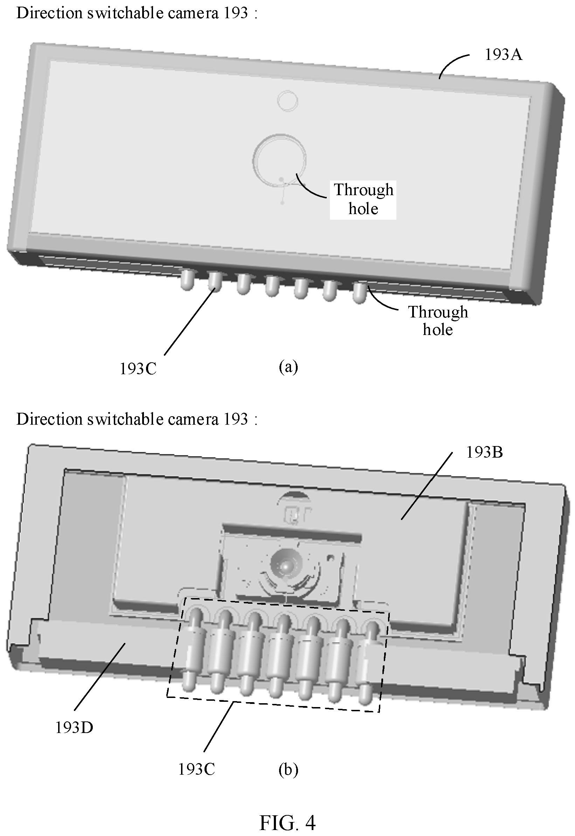

FIG. 4 is a schematic diagram of a direction switchable camera 193 including a Pogo Pin header.

In this embodiment of this application, the direction switchable camera 193 includes a housing 193A and photographing components 193B disposed in the housing 193A. An imaging lens in the photographing components 193B may converge and image light through a through hole provided on a side surface of the housing 193A. The direction switchable camera 193 further includes Pogo Pin headers 193C. One side of each of the Pogo Pin headers 193C is connected to an ISP in the photographing components 193B, and the other side of each of the Pogo Pin headers 193C may be aligned with and connected to, by passing through a through hole provided on a bottom surface of the housing 193A, Pogo Pin interfaces disposed on a body 101 of an electronic device 100, to implement an electrical connection between the direction switchable camera 193 and the body 101 of the electronic device 100.

In this embodiment of this application, a quantity and arrangement positions of the Pogo Pin headers 193C in the direction switchable camera 193 may be set according to a requirement. This is not limited in this embodiment of this application. Correspondingly, a quantity and arrangement positions of the Pogo Pin interfaces disposed on the body 101 of the electronic device 100 need to correspond to the Pogo Pin headers 193C disposed in the direction switchable camera 193. Both the Pogo Pin headers 193C and the Pogo Pin interfaces may be referred to as pins.

Optionally, to implement a better connection, a magnetic connecting member 193D may be further disposed on an inner side of a bottom surface of the housing 193A in the direction switchable camera 193. Alternatively, the bottom surface of the housing 193A in the direction switchable camera 193 may also be made of a magnetic material or a bezel material of the body 101 of the electronic device 100 may also be a magnetic material.

For example, the magnetic connecting member 193D may be made of a magnet or a magnetic material that can be attracted by a magnet, and a corresponding magnetic attraction member may be disposed on the body 101 of the corresponding electronic device 100.

For example, when the magnetic connecting member 193D is made of the magnet, the magnet or the magnetic material may be correspondingly disposed on the body 101 of the electronic device 100. For another example, when the magnetic connecting member 193D is made of the magnetic material, the magnet may be correspondingly disposed on the body 101 of the electronic device 100.

For example, as shown in (a) and (b) in FIG. 4, the magnet may be disposed on an inner side of a lower surface of the housing 193A in the direction switchable camera 193. Correspondingly, the magnetic attraction member may be disposed on an inner side of an upper bezel of the body 101 of the electronic device 100.

In this embodiment of this application, the magnetic connecting member is disposed or the bezel materials of the housing and the body 101 are set as the magnetic materials, so that the direction switchable camera 193 and the body 101 of the electronic device 100 may be connected in a magnetic attraction manner with a simple structure, and have features such as active attraction and instant connection upon proximity. In addition, because connection between the direction switchable camera 193 and the body 101 of the electronic device 100 is relatively stable after the connection, the magnetic attraction manner may be applicable to some scenarios in which bumpiness occurs in an environment.

In this embodiment of this application, when the direction switchable camera 193 is connected to the body 101 and faces a side of a keyboard, it may be referred to as that the direction switchable camera 193 is in a forward direction mode; When the direction switchable camera 193 is connected to the body 101 and faces a side away from the keyboard, it may be referred to as that the direction switchable camera 193 is in a backward direction mode.

It should be understood that in the forward direction mode and the backward direction mode, for the direction switchable camera 193, the quantity and the positions of the Pogo Pin headers that are disposed are not changed. However, for the body 101 of the electronic device 100, a sequence in which headers on the direction switchable camera 193 are configured to be connected to the Pogo Pin interfaces on the body 101 is switched.

For example, in the forward direction mode, a 1^{st} Pogo Pin header to an N^{th} Pogo Pin header on the direction switchable camera 193 are respectively aligned with and connected to a 1^{st} Pogo Pin interface to an N^{th} Pogo Pin interface on the body 101 of the electronic device 100; and in the backward direction mode, an N^{th} Pogo Pin header to a 1^{st} Pogo Pin header on the direction switchable camera 193 are respectively aligned with and connected to a 1^{st} Pogo Pin interface to an N^{th} Pogo Pin interface on the body 101 of the electronic device 100. Through comparison between the two modes, a correspondence between the Pogo Pin headers and the Pogo Pin interfaces is changed.

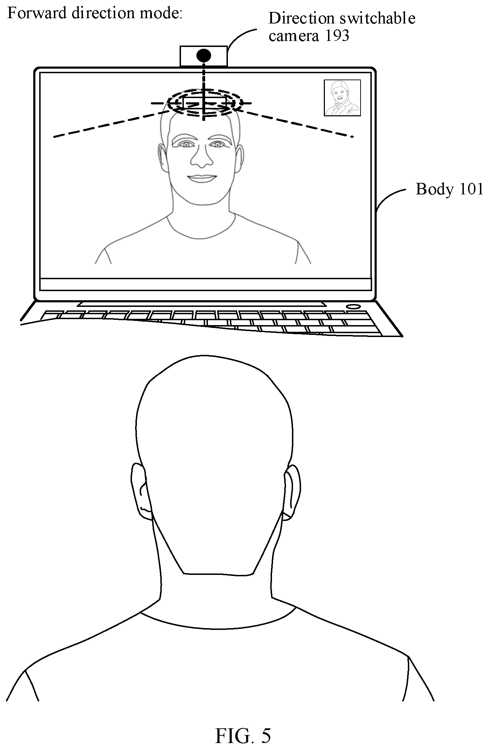

For example, FIG. 5 is a schematic diagram of a scenario photographed by a direction switchable camera 193 in a forward direction mode according to an embodiment of this application. As shown in FIG. 5, when a camera on a body 101 is in the forward direction mode, in response to an operation of a user, after the direction switchable camera 193 is enabled, the user can be photographed. This scenario may be applicable to an online interview, a video chat, and the like.

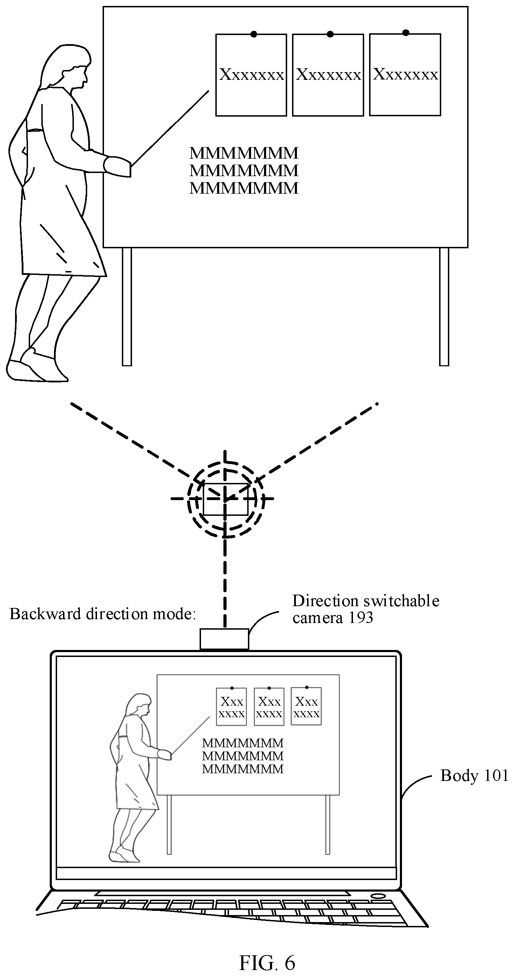

For example, FIG. 6 is a schematic diagram of a scenario photographed by a direction switchable camera 193 in a backward direction mode according to an embodiment of this application. As shown in FIG. 6, when a camera on a body 101 is in the backward direction mode, in response to an operation of a user, after the direction switchable camera 193 is enabled, the user may photograph a photographing scenario that is directly in front of the user through the camera. This scenario may be applicable to online teaching, livestreaming e-commerce, and the like.

In addition, in this embodiment of this application, as shown in FIG. 5 and FIG. 6, the Pogo Pin interfaces may be further directly added on a bezel of the body 101 of the electronic device 100, and are configured to be aligned with and connected to the Pogo Pin headers included in the direction switchable camera 193. In this way, after the connection, the direction switchable camera 193 is in a protruding state relative to the body 101.

Alternatively, a groove may be further added on the bezel of the body 101 of the electronic device 100, and the Pogo Pin interfaces are further disposed in the groove, to be aligned with and connected to the Pogo Pin headers included in the direction switchable camera 193. In this way, after the connection, the direction switchable camera 193 is located in the groove that is provided.

Optionally, the Pogo Pin interfaces added on the body 101 of the electronic device 100 may be disposed on any bezel of the electronic device 100. For example, the Pogo Pin interfaces may be added on the upper bezel or a side bezel of the body 101 of the electronic device 100.

In this embodiment of this application, on a premise that a quantity of configured cameras is limited, considering photographing requirements of the user for blackboard writings in a forward direction, text, and an environment in which a person is in, a built-in camera included in the electronic device is modified into a split direction switchable camera that may be connected to the body of the electronic device, so that the direction switchable camera may implement switching between different directions on the body of the electronic device, to expand a photographing range of the camera, satisfy more photographing requirements, and further improve a screen-to-body ratio.

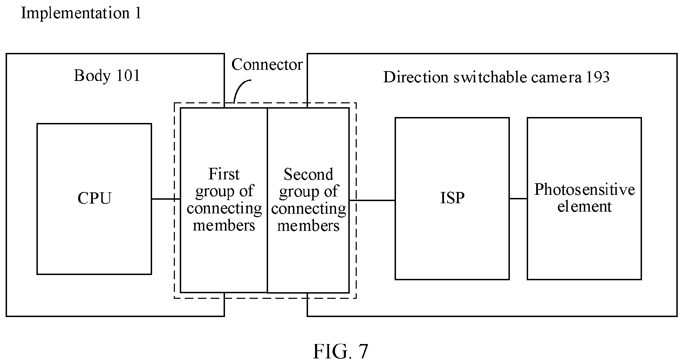

To enable the direction switchable camera to implement switching between different directions on the body 101 of the electronic device 100, in this embodiment of this application, definitions of connecting members and a circuit on a side of the direction switchable camera, and definitions of connecting members and a circuit on a side of the body 101 of the electronic device 100 may be modified, so that before and after the direction switchable camera switches directions, the connecting members on the body 101 are respectively aligned with and connected to the connecting members having the same definition on a side of the direction switchable camera. Based on this idea, an embodiment of this application provides various circuits. The circuits provided in this embodiment of this application are separately described in detail below with reference to FIG. 7 to FIG. 17.

### Implementation 1

FIG. 7 is a schematic structural diagram of another electronic device according to an embodiment of this application.

As shown in FIG. 7, an embodiment of this application provides an electronic device 100, including a split body 101 and a direction switchable camera. The body 101 is aligned with and connected to, through a first group of connecting members that are disposed, a second group of connecting members disposed on the direction switchable camera, to perform data transmission and supply power, where both the first group of connecting members and the second group of connecting members include a plurality of connecting members, and functions of at least some of the connecting members are the same when alignment and connection are performed; when the first group of connecting members are aligned with and connected to the second group of connecting members based on a first correspondence, the body 101 is connected to the direction switchable camera 193 and the direction switchable camera 193 faces toward a first direction; and when the first group of connecting members are aligned with and connected to the second group of connecting members based on a second correspondence, the body 101 is connected to the direction switchable camera 193 and the direction switchable camera 193 faces toward a second direction.

Specifically, after the first group of connecting members are aligned with and connected to the second group of connecting members, a CPU in the body 101 is connected to an ISP in the direction switchable camera 193, to implement data transmission and supply power.

Optionally, the connecting members in the first group of connecting members are Pogo pin interfaces, and the connecting members in the second group of connecting members are Pogo pin headers.

Optionally, when a quantity of the connecting members included in the first group of connecting members is at least 7, functions of the plurality of connecting members included in the first group of connecting members and/or the second group of connecting members are centro-symmetrically distributed.

It should be understood that, when data communication and power transmission are performed between a processor 110 on a side of the body 101 and the direction switchable camera 193 based on a protocol USB 2.0, at least four ports with different definitions are needed, which are respectively a positive electrode of a power supply, a ground end (or a negative electrode of the power supply), a data plus, and a data minus. For example, a voltage of the positive electrode of the power supply may be 3.3 V.

In this embodiment of this application, data communication and circuit transmission that are performed between the processor on a side of the body 101 and the direction switchable camera 193 may also be based on protocols such as a protocol USB 1.0, a protocol USB 3.0, and a protocol Type-C. A port that needs to be defined in each protocol may be disposed according to a requirement. This is not limited in this embodiment of this application.

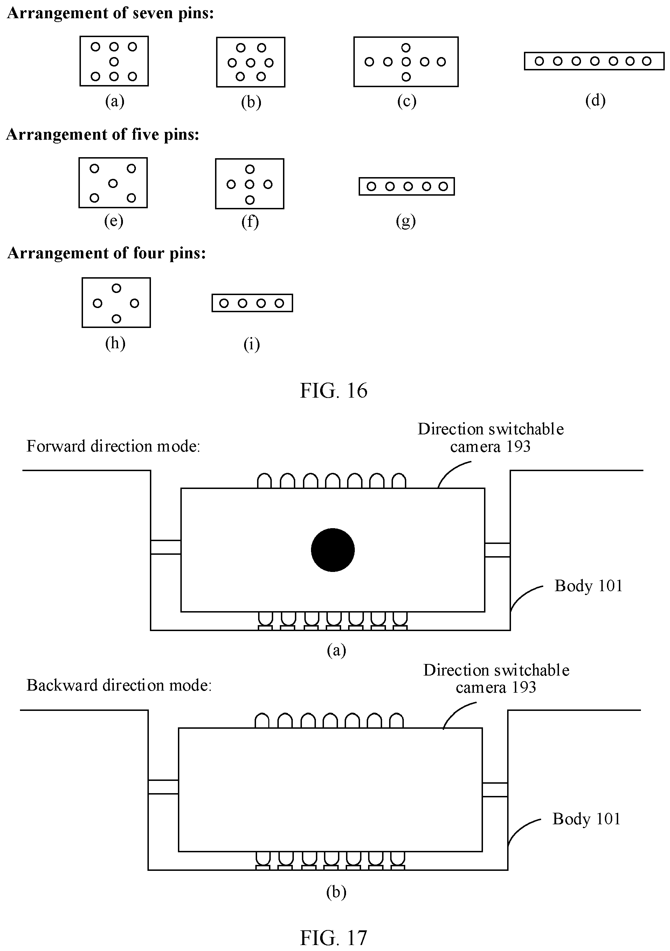

Optionally, when the quantity of the connecting members included in the first group of connecting members is seven, the first group of connecting members and the second group of connecting members are arranged in a same manner, and are arranged at equal intervals in at least one of the following manners: an I-shape (as shown in (a) in FIG. 16), a cellular-shape (as shown in (b) in FIG. 16), an asterisk-shape (as shown in (c) in FIG. 16), and a straight line (as shown in (d) in FIG. 16). In this embodiment of this application, when the first group of connecting members and the second group of connecting members are arranged in the straight line, a thicknesses of the body 101 of the electronic device 100 and a thicknesses of the direction switchable camera 193 may be designed to be thinner.

For example, using (a), (b), (c), and (d) in FIG. 16 as an example, the first direction is opposite to the second direction, or a difference between the first direction and the second direction is 180°.

For example, using (b) in FIG. 16 as an example, a difference between the first direction and the second direction may be 60°, 120°, 180°, 240°, or 300°. In this case, a third switching circuit may be further added on a side of the body 101 of the electronic device 100 or a side of the direction switchable camera 193, and is configured to switch functions of connecting members that are at a non-central position in the first group of connecting members or the second group of connecting members when the first group of connecting members are aligned with and connected to the second group of connecting members based on the first correspondence and the second correspondence. For descriptions of the third switching circuit, refer to subsequent descriptions of the second switching circuit. Details are not described herein again.

In this embodiment of this application, when the first group of connecting members and the second group of connecting members are arranged in a manner as shown in (b) in FIG. 16, the direction switchable camera 193 may implement switching in more directions. Optionally, a rotation controller may be further disposed in the electronic device 100, to control the direction switchable camera to automatically rotate, so that switching in the foregoing different directions is implemented.

An example in which the body 101 of the electronic device 100 is aligned with and connected to the direction switchable camera 193 through seven Pogo pin interfaces and seven Pogo pin headers is used below. The seven Pogo pin interfaces are located on the body 101 of the electronic device 100, and the seven Pogo pin headers are located on the direction switchable camera 193. In addition, the seven Pogo pin interfaces are arranged in a straight line, and correspondingly, the seven Pogo pin headers are also arranged in the straight line.

Optionally, in an implementation, on a side of the body 101 of the electronic device 100, definitions corresponding to four of the seven Pogo pin interfaces are a positive electrode of a power supply VCC, a ground end GND, a data plus D+, and a data minus D-. However, on a side of the direction switchable camera 193, definitions of the seven Pogo pin headers also include the positive electrode of the power supply VCC, the ground end GND, the data plus D+, and the data minus D-, and the definitions of the seven Pogo pin headers are symmetrically distributed. In addition, a sequence of the definitions of the four Pogo pin interfaces is the same as a sequence of the definitions of four Pogo pin headers whose definitions are not repeated in the seven Pogo pin headers.

For example, on a side of the body 101 of the electronic device 100, one Pogo pin interface at a middle position and three Pogo pin interfaces on one adjacent side of the seven Pogo pin interfaces respectively have the foregoing four definitions, or one Pogo pin interface at a middle position and three Pogo pin interfaces on the other adjacent side of the seven Pogo pin interfaces respectively have the foregoing four definitions. Specifically, a sequence of definitions may be set according to a requirement.

For example, on a side of the direction switchable camera 193, a definition of one Pogo pin header at a middle position of the seven Pogo pin headers may be any one of the positive electrode of the power supply VCC, the ground end GND, the data plus D+, and the data minus D-. Definitions of the other six Pogo pin headers are different from the definition of the Pogo pin header at the middle position, and are symmetrically distributed. Specifically, a sequence of definitions may be set according to a requirement.

The sequence of the definitions of the seven Pogo pin headers is described below through Table 1.

**Table 1**

| Interface sequence | First group of definitions | Second group of definitions | Third group of definitions | Fourth group of definitions |
|---|---|---|---|---|
| 1 | GND | VCC | D- | D+ |
| 2 | D+ | GND | VCC | D- |
| 3 | D- | D+ | GND | VCC |
| 4 | VCC | D- | D+ | GND |
| 5 | D- | D+ | GND | VCC |
| 6 | D+ | GND | VCC | D- |
| 7 | GND | VCC | D- | D+ |

It should be understood that, in addition to the four manners included in the foregoing Table 1, the sequence of the definitions of the seven Pogo pin headers may further include another sequence. This is not limited in this embodiment of this application.

### Embodiment 1

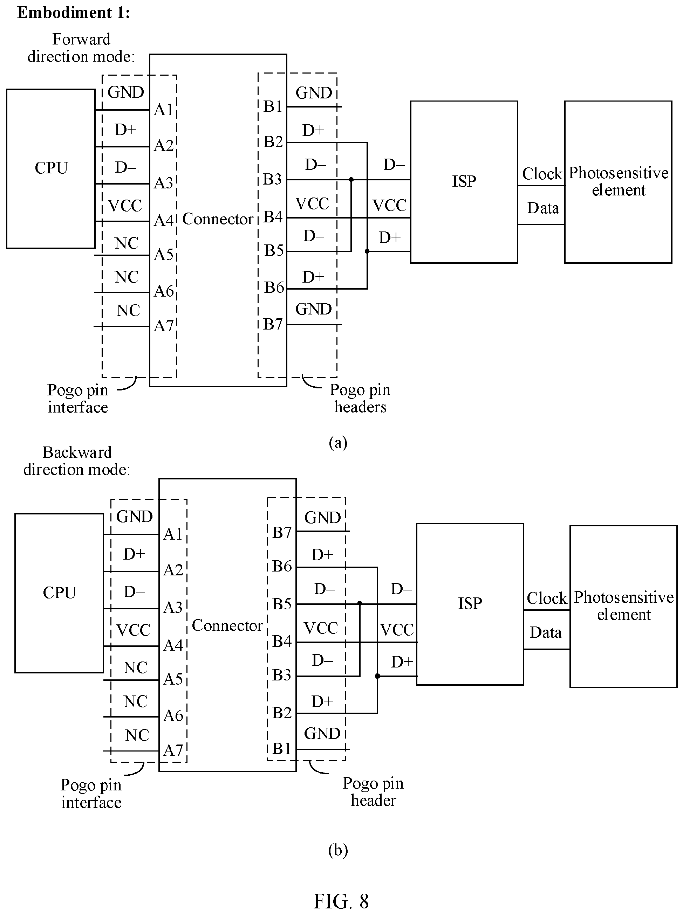

FIG. 8 is a schematic structural diagram of an electronic device according to an embodiment of this application.

In an embodiment, on a side of a body 101 of the electronic device 100, seven Pogo pin interfaces are disposed along a first sorting direction. Definitions corresponding to the first four Pogo pin interfaces are respectively a ground end GND, a data plus D+, a data minus D-, and a positive electrode of a power supply VCC in sequence, and are configured to be aligned with and connected to Pogo pin headers having the same definition one by one. In addition, the other end of each Pogo pin interface is separately connected to a CPU in the body 101. The Pogo pin interface whose definition is the positive electrode of the power supply VCC is a 4^{th} Pogo pin interface, and is located at a middle position; and the other end of each of the three remaining Pogo pin interfaces is not connected to the CPU in the body 101, and has no definition either. For example, the first sorting direction is a direction from a 1^{st} Pogo pin interface to a 7^{th} Pogo pin interface.

When a direction switchable camera 193 is in a forward direction mode, on a side of the direction switchable camera 193, using a first group of definitions in Table 1 as an example, definitions corresponding to seven Pogo pin headers disposed along the first sorting direction are respectively the ground end GND, the data plus D+, the data minus D-, the positive electrode of the power supply VCC, the data minus D-, the data plus D+, and the ground end GND in sequence, and the other end of each Pogo pin header is separately connected to an ISP in the direction switchable camera 193. The ground end GND may not be connected to the ISP. This is not limited in this embodiment of this application.

It should be understood that when a plurality of Pogo pin headers having the same definition are connected to a port on the ISP, after being connected in parallel to a same point, the plurality of Pogo pin headers may be connected to the port on the ISP.

After the direction switchable camera 193 in the forward direction mode is aligned with and connected to the body 101 one by one through the foregoing seven Pogo pin interfaces (A1 to A7 as shown in (a) in FIG. 8) and the foregoing seven Pogo pin headers (B1 to B7 as shown in (a) in FIG. 8), it means that the 1^{st} Pogo pin interface to the 4^{th} Pogo pin interface (A1 to A4 as shown in (a) in FIG. 8) are respectively aligned with and connected to the 1^{st} Pogo pin header to the 4^{th} Pogo pin header (B1 to B4 as shown in (a) in FIG. 8) one by one, which may form a data transmission circuit, to implement data transmission from the direction switchable camera 193 to the body 101; and which may form a power supply circuit, to implement power supply from the body 101 to the direction switchable camera 193. However, after the 5^{th} Pogo pin interface to the 7^{th} Pogo pin interface (A5 to A7 as shown in (a) in FIG. 8) are respectively aligned with and connected to the 5^{th} Pogo pin header to the 7^{th} Pogo pin header (B5 to B7 as shown in (a) in FIG. 8) one by one, because the 5^{th} Pogo pin interface to the 7^{th} Pogo pin interface are not connected to the CPU and have no definition, these interfaces and headers actually do not implement any function.

When the direction switchable camera 193 is in a backward direction mode, on a side of the direction switchable camera 193, after a sequence of the seven Pogo pin headers is reversed, along the first sorting direction, definitions corresponding to the seven Pogo pin headers are still respectively the ground end GND, the data plus D+, the data minus D-, the positive electrode of the power supply VCC, the data minus D-, the data plus D+, and the ground end GND in sequence.

In this way, after the direction switchable camera 193 in the backward direction mode is aligned with and connected to the body 101 one by one through the foregoing seven Pogo pin interfaces (A1 to A7 as shown in (b) in FIG. 8) and the foregoing seven Pogo pin headers (B7 to B1 as shown in (b) in FIG. 8), it means that a 1^{st} Pogo pin interface to a 4^{th} Pogo pin interface (A1 to A4 as shown in (b) in FIG. 8) are respectively aligned with and connected to a 1^{st} Pogo pin header to a 4^{th} Pogo pin header (B7 to B4 as shown in (b) in FIG. 8) one by one, which may form the data transmission circuit, to implement data transmission from the direction switchable camera 193 to the body 101; and which may form the power supply circuit, to implement power supply from the body 101 to the direction switchable camera 193. However, after a 5^{th} Pogo pin interface to a 7^{th} Pogo pin interface (A5 to A7 as shown in (b) in FIG. 8) are aligned with and connected to a 5^{th} Pogo pin header to a 7^{th} Pogo pin header (B3 to B1 as shown in (b) in FIG. 8) one by one, because the 5^{th} Pogo pin interface to the 7^{th} Pogo pin interface are not connected to the CPU and have no definition, these interfaces and headers actually do not implement any function.

It should be noted that a position correspondence between the seven Pogo pin interfaces and the seven Pogo pin headers that are shown in (a) in FIG. 8 is a first correspondence, and a position correspondence between the seven Pogo pin interfaces and the seven Pogo pin headers that are shown in (b) in FIG. 8 is a second correspondence.

In this embodiment of this application, when a quantity of the Pogo pin interfaces and a quantity of the Pogo pin headers are at least seven, definitions of the Pogo pin interfaces on a side of the body 101 of the electronic device 100 and definitions of the Pogo pin headers on a side of the direction switchable camera 193 are modified, so that when the direction switchable camera 193 is in the forward direction mode and the backward direction mode, the Pogo pin interfaces with the same function and the Pogo pin headers with the same function can be aligned with and connected to each other on both the body 101 and the direction switchable camera 193, so that the direction switchable camera 193 may perform switching photographing in a forward direction and a backward direction on the body 101 of the electronic device 100, to expand a photographing range and satisfy more photographing requirements.

Optionally, in another implementation, on a side of the body 101 of the electronic device 100, the definitions of the seven Pogo pin interfaces include the positive electrode of the power supply VCC, the ground end GND, the data plus D+, and the data minus D-, and the definitions of the seven Pogo pin interfaces are symmetrically distributed. However, on a side of the body 101 of the electronic device 100, definitions corresponding to four of the seven Pogo pin interfaces also include the positive electrode of the power supply VCC, the ground end GND, the data plus D+, and the data minus D-. In addition, a sequence of definitions of the four Pogo pin headers is the same as a sequence of definitions of four Pogo pin interfaces whose functions are not repeated in the seven Pogo pin interfaces.

For example, on a side of the body 101 of the electronic device 100, a definition of one Pogo pin interface at a middle position of the seven Pogo pin interfaces may be any one of the positive electrode of the power supply VCC, the ground end GND, the data plus D+, and the data minus D-. Definitions of the other six Pogo pin headers are different from the definition of the Pogo pin header at the middle position, and the definitions of the other six Pogo pin headers are symmetrically distributed.

For example, on a side of the direction switchable camera 193, one Pogo pin header at a middle position and three Pogo pin headers on one adjacent side of the seven Pogo pin headers respectively have the foregoing four definitions, or one Pogo pin header at a middle position and three Pogo pin headers on the other adjacent side of the seven Pogo pin headers respectively have the foregoing four definitions.

### Embodiment 2

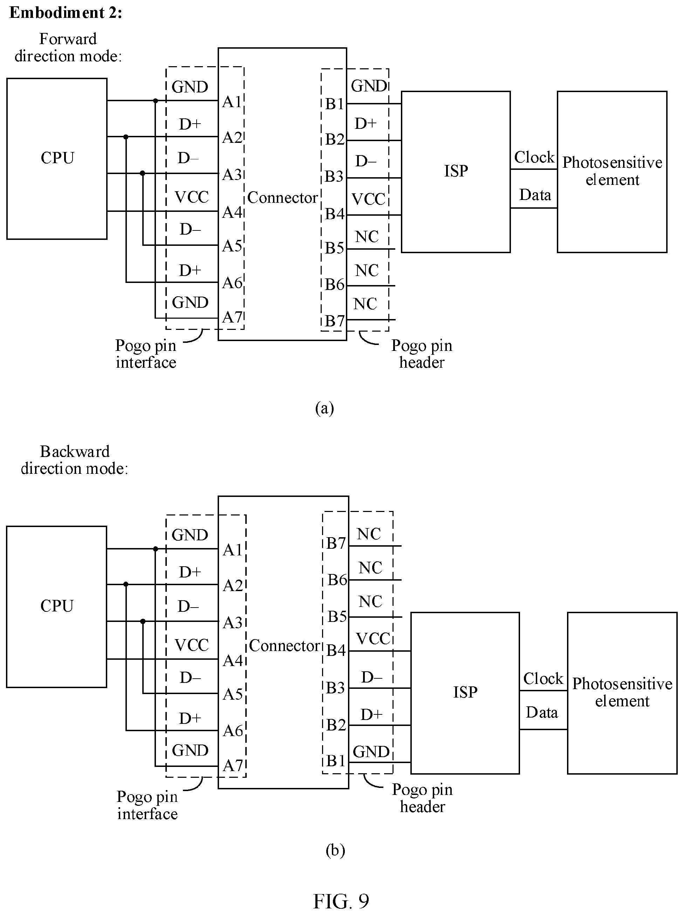

FIG. 9 is a schematic structural diagram of an electronic device according to an embodiment of this application.

In an embodiment, on a side of a body of the electronic device 100, seven Pogo pin interfaces are disposed along a first sorting direction. Definitions corresponding to the seven Pogo pin interfaces are respectively a ground end GND, a data plus D+, a data minus D-, a positive electrode of a power supply VCC, the data minus D-, the data plus D+, and the ground end GND in sequence, and are configured to be aligned with and connected to Pogo pin headers having the same definition one by one. In addition, the other end of each Pogo pin interface is separately connected to a CPU in the body.

It should be understood that when a plurality of Pogo pin headers having the same definition are connected to a port on the CPU, after being connected in parallel to a same point, the plurality of Pogo pin headers having the same definition may be connected to the port on the CPU.

For example, the first sorting direction is a direction from a 1^{st} Pogo pin interface to a 7^{th} Pogo pin interface.

When a direction switchable camera 193 is in a forward direction mode, on a side of the direction switchable camera 193, using a first group of definitions in Table 1 as an example, seven Pogo pin interfaces are disposed along the first sorting direction. Definitions corresponding to the first four Pogo pin headers are respectively the ground end GND, the data plus D+, the data minus D-, and the positive electrode of the power supply VCC in sequence; and the other end of each Pogo pin header is separately connected to an ISP in the direction switchable camera 193. A Pogo pin interface whose definition is the positive electrode of the power supply VCC is a 4^{th} Pogo pin interface, and is located at a middle position; and the other end of each of the three remaining Pogo pin interfaces is not connected to the ISP in the direction switchable camera 193, and has no definition either. The ground end GND may not be connected to the ISP. This is not limited in this embodiment of this application.

After the direction switchable camera 193 in the forward direction mode is aligned with and connected to the body 101 one by one through the foregoing seven Pogo pin interfaces (A1 to A7 as shown in (a) in FIG. 9) and the foregoing seven Pogo pin headers (B1 to B7 as shown in (a) in FIG. 9), it means that a 1^{st} Pogo pin interface to a 4^{th} Pogo pin interface (A1 to A4 as shown in (a) in FIG. 9) are respectively aligned with and connected to a 1^{st} Pogo pin header to a 4^{th} Pogo pin header (B1 to B4 as shown in (a) in FIG. 9) one by one, which may form a data transmission circuit, to implement data transmission from the direction switchable camera 193 to the body 101; and which may form a power supply circuit, to implement power supply from the body to the direction switchable camera 193. However, after a 5^{th} Pogo pin interface to a 7^{th} Pogo pin interface (A5 to A7 as shown in (a) in FIG. 9) are respectively aligned with and connected to a 5^{th} Pogo pin header to a 7^{th} Pogo pin header (B5 to B7 as shown in (a) in FIG. 9) one by one, because the 5^{th} Pogo pin interface to the 7^{th} Pogo pin interface are not connected to the ISP and have no definition, these interfaces and headers actually do not implement any function.

When the direction switchable camera 193 is in a backward direction mode, on a side of the direction switchable camera 193, after a sequence of the seven Pogo pin headers is reversed, along the first sorting direction, the first three of the seven Pogo pin headers have no definition, and the last four of the seven Pogo pin headers are respectively the positive electrode of the power supply VCC, the data minus D-, the data plus D+, and the ground end GND in sequence. In this way, after the direction switchable camera 193 in the backward direction mode is aligned with and connected to the body one by one through the foregoing seven Pogo pin interfaces (A1 to A7 as shown in (b) in FIG. 9) and the foregoing seven Pogo pin headers (B7 to B1 as shown in (b) in FIG. 9), it means that the 4^{th} Pogo pin interface to the 7^{th} Pogo pin interface (A4 to A7 as shown in (b) in FIG. 9) are respectively aligned with and connected to the 4^{th} Pogo pin header to the 7^{th} Pogo pin header (B4 to B7 as shown in (b) in FIG. 9) one by one, which may form the data transmission circuit, to implement data transmission from the direction switchable camera 193 to the body; and which may form the power supply circuit, to implement power supply from the body to the direction switchable camera 193. However, after a 1^{st} Pogo pin interface to a 3^{rd} Pogo pin interface (A1 to A3 as shown in (b) in FIG. 9) are respectively aligned with and connected to a 1^{st} Pogo pin header to a 3^{rd} Pogo pin header (B7 to B5 as shown in (b) in FIG. 9) one by one, because the 1^{st} Pogo pin header to the 3^{rd} Pogo pin header are not connected to the ISP and have no definition, these interfaces and headers actually do not implement any function.

It should be noted that a position correspondence between the seven Pogo pin interfaces and the seven Pogo pin headers that are shown in (a) in FIG. 9 is a first correspondence, and a position correspondence between the seven Pogo pin interfaces and the seven Pogo pin headers that are shown in (b) in FIG. 9 is a second correspondence.

In this embodiment of this application, when a quantity of the Pogo pin interfaces and a quantity the Pogo pin headers are at least 7, definitions of the Pogo pin interfaces on a side of the body of the electronic device and definitions of the Pogo pin headers on a side of the direction switchable camera are modified, so that when the direction switchable camera is in the forward direction mode and the backward direction mode, the Pogo pin interfaces with the same function and the Pogo pin headers with the same function can be aligned with and connected to each other on both the body and the direction switchable camera. In this way, the direction switchable camera may perform switching photographing in a forward direction and a backward direction on the body of the electronic device, to expand a photographing range and satisfy more photographing requirements.

### Implementation 2

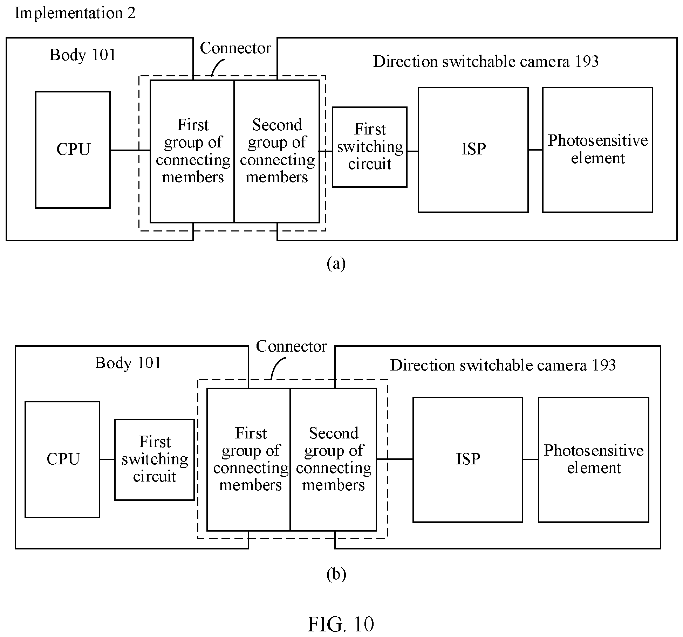

FIG. 10 is a schematic structural diagram of another electronic device according to an embodiment of this application.

As shown in FIG. 10, an embodiment of this application provides an electronic device 100, including a split body 101 and a direction switchable camera 193. The body is aligned with and connected to, through a first group of connecting members that are disposed, a second group of connecting members disposed on the direction switchable camera 193, to perform data transmission and supply power, where both the first group of connecting members and the second group of connecting members include a plurality of connecting members, and functions of at least some of the connecting members are the same when alignment and connection are performed; when the first group of connecting members are aligned with and connected to the second group of connecting members based on a first correspondence, the body is connected to the direction switchable camera 193 and the direction switchable camera faces toward a first direction; and when the first group of connecting members are aligned with and connected to the second group of connecting members based on a second correspondence, the body is connected to the direction switchable camera 193 and the direction switchable camera 193 faces toward a second direction.

Specifically, after the first group of connecting members are aligned with and connected to the second group of connecting members, a CPU in the body 101 is connected to an ISP in the direction switchable camera 193, to implement data transmission and supply power.

Optionally, the connecting members in the first group of connecting members are Pogo pin interfaces, and the connecting members in the second group of connecting members are Pogo pin headers.

Optionally, when a quantity of the connecting members included in the first group of connecting members is five, the electronic device 100 further includes a first switching circuit; when the first switching circuit is disposed in the direction switchable camera 193, the second group of connecting members are connected to, through the first switching circuit, the ISP included in the direction switchable camera 193, where the first switching circuit is configured to switch functions of the connecting members that are at a non-central position in the second group of connecting members when the first group of connecting members are aligned with and connected to the second group of connecting members based on the first correspondence and the second correspondence; and when the first switching circuit is disposed in the body of the electronic device 100, the first group of connecting members are connected to, through the first switching circuit, the processor included in the body, where the first switching circuit is configured to switch functions of connecting members that are at a non-central position in the first group of connecting members when the first group of connecting members are aligned with and connected to the second group of connecting members based on the first correspondence and the second correspondence.

Optionally, when the quantity of the connecting members included in the first group of connecting members is five, the first group of connecting members and the second group of connecting members are arranged in a same manner, and are arranged at equal intervals in at least one of the following manners: an X-shape (as shown in (e) in FIG. 16), an asterisk-shape (as shown in (f) in FIG. 16), and a straight line (as shown in (g) in FIG. 16). In this embodiment of this application, when the first group of connecting members and the second group of connecting members are arranged in the straight line, a thicknesses of the body of the electronic device 100 and a thicknesses of the direction switchable camera 193 may be designed to be thinner.

For example, using (e), (f), and (g) in FIG. 16 as an example, the first direction is opposite to the second direction, or a difference between the first direction and the second direction is 180°.

For example, using (e) and (f) in FIG. 16 as an example, a difference between the first direction and the second direction may be 90°, 180°, and 270°. In this case, a fourth switching circuit may be further added on a side of the body of the electronic device 100 or a side of the direction switchable camera 193, and is configured to switch functions of the connecting members that are at a non-central position in the first group of connecting members or the second group of connecting members when the first group of connecting members are aligned with and connected to the second group of connecting members based on the first correspondence and the second correspondence. For descriptions of the fourth switching circuit, refer to subsequent descriptions of the second switching circuit. Details are not described herein again.

In this embodiment of this application, when both the first group of connecting members and the second group of connecting members are arranged in the manner shown in (e) or (f) in FIG. 16, the direction switchable camera 193 may implement switching in more directions. Optionally, a rotation controller may be further disposed in the electronic device 100, to control the direction switchable camera 193 to automatically rotate, so that switching in the foregoing different directions is implemented.

An example in which the body 101 of the electronic device 100 is aligned with and connected to the direction switchable camera 193 through five Pogo pin interfaces and five Pogo pin headers is used below. The five Pogo pin interfaces are located on the body of the electronic device 100, and the five Pogo pin headers are located on the direction switchable camera 193. In addition, the five Pogo pin interfaces are arranged in the straight line, and correspondingly, the five Pogo pin headers are also arranged in the straight line.

Optionally, in an implementation, on a side of the body of the electronic device 100, definitions corresponding to four of the five Pogo pin interfaces are a positive electrode of a power supply VCC, a ground end GND, data plus D+, and data minus D-, and a definition corresponding to another Pogo pin interface may be any one of the positive electrode of the power supply VCC, the ground end GND, the data plus D+, and the data minus D-. This is not limited in this embodiment of this application. However, on a side of the direction switchable camera 193, a sequence of the definitions of the five Pogo pin headers is the same as a sequence of the definitions of the five Pogo pin interfaces.

For example, when interfaces with repeated definitions in the five Pogo pin interfaces are positive electrodes of the power supply VCCs or ground ends GNDs, two positive electrodes of the power supply VCCs are symmetrically distributed, or two ground ends GNDs are symmetrically distributed. In addition, the data plus D+ and the data minus D- are also symmetrically distributed.

For example, when interfaces with repeated definitions in the five Pogo pin interfaces are data pluses D+ or data minuses D-, two data pluses D+ are symmetrically distributed, or two data minuses D- are symmetrically distributed. In addition, the positive electrode of the power supply VCC and the ground end GND are symmetrically distributed.

The sequence of the definitions of the five Pogo pin interfaces is described below through Table 2.

**Table 2**

| Interface sequence | First group of definitions | Second group of definitions | Third group of definitions | Fourth group of definitions | Fifth group of definitions | Sixth group of definitions | Seventh group of definitions | Eighth group of definitions |
|---|---|---|---|---|---|---|---|---|
| 1 | GND | D+ | VCC | D+ | VCC | D+ | VCC | D- |
| 2 | D+ | GND | D+ | VCC | D+ | VCC | D- | VCC |
| 3 | VCC | VCC | GND | GND | D- | D- | D+ | D+ |
| 4 | D- | GND | D- | VCC | D+ | GND | D- | GND |
| 5 | GND | D- | VCC | D- | GND | D+ | GND | D- |

It should be understood that, for the sequence of the definitions of the five Pogo pin interfaces, in addition to the eight manners included in the foregoing Table 2, when the data plus D+ and the data minus D- are symmetrically distributed, a definition of the data plus D+ and a definition of the data minus D- may be interchanged; and when the positive electrode of the power supply VCC and the ground end GND are symmetrically distributed, a definition of the positive electrode of the power supply VCC and a definition of the ground end GND may also be interchanged, or may be arranged in another sequence. This is not limited in this embodiment of this application.

### Embodiment 3

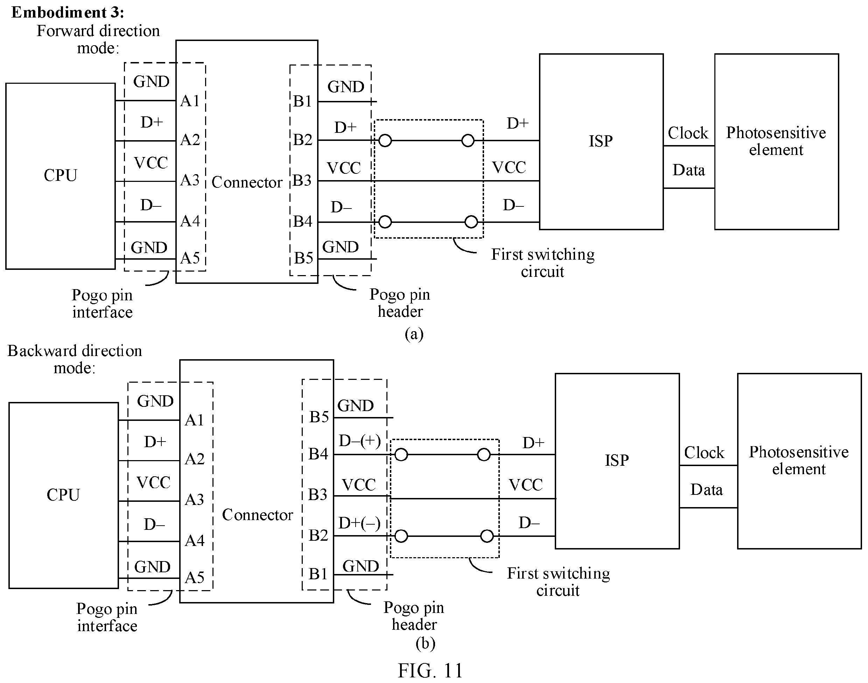

FIG. 11 is a schematic structural diagram of an electronic device according to an embodiment of this application.

In an embodiment, on a side of the body of an electronic device 100, using a first group of definitions in Table 2 as an example, definitions corresponding to five Pogo pin interfaces disposed along a first sorting direction are respectively a ground end GND, a data plus D+, a data minus D-, a positive electrode of a power supply VCC, and the ground end GND in sequence, and are configured to be aligned with and connected to Pogo pin headers having the same definition one by one. In addition, the other end of each Pogo pin interface is separately connected to a CPU in the body 101. For example, the first sorting direction is a direction from a 1^{st} Pogo pin interface to a 5^{th} Pogo pin interface.

When a direction switchable camera 193 is in a forward direction mode, on a side of the direction switchable camera 193, definitions corresponding to five Pogo pin headers disposed along the first sorting direction are respectively the ground end GND, the data plus D+, the data minus D-, the positive electrode of the power supply VCC, and the ground end GND in sequence. The other end of each of at least two Pogo pin headers whose definitions are the data plus D+ and the data minus D- are connected to an ISP in the direction switchable camera 193 through a first switching circuit. The ground end GND and the positive electrode of the power supply VCC may not be connected to the first switching circuit. This is not limited in this embodiment of this application.

It should be understood that the first switching circuit may include a plurality of switching switches, and the plurality of switching switches may implement a case in which a switching connection is performed between different Pogo pin headers and a same port on the ISP.

After the direction switchable camera 193 in the forward direction mode is aligned with and connected to the body one by one through the foregoing five Pogo pin interfaces (A1 to A5 as shown in (a) in FIG. 11) and the foregoing five Pogo pin headers (B1 to B5 as shown in (a) in FIG. 11), a data transmission circuit may be formed, to implement data transmission from the direction switchable camera 193 to the body; and a power supply circuit may be formed, to implement power supply from the body to the direction switchable camera 193. In the forward direction mode, the first switching circuit may be connected to a Pogo pin header (B2 as shown in (a) in FIG. 11) whose definition is the data plus D+ and a first port that is on the ISP and that corresponds to the data plus D+, and may be further connected to a Pogo pin header (B4 as shown in (a) in FIG. 11) whose definition is data minus D- and a second port that is on the ISP and that corresponds to the data minus D-.

When the direction switchable camera 193 is in a backward direction mode, on a side of the direction switchable camera 193, after a sequence of the five Pogo pin headers is reversed, along the first sorting direction, the definitions corresponding to the five Pogo pin headers are respectively the ground end GND, the data minus D-, the positive electrode of the power supply VCC, the data plus D+, and the ground end GND in sequence.

After the direction switchable camera 193 in the backward direction mode is aligned with and connected to the body one by one through the foregoing five Pogo pin interfaces (A1 to A5 as shown in (b) in FIG. 11) and the foregoing five Pogo pin headers (B5 to B1 as shown in (b) in FIG. 11), the data transmission circuit may be formed, to implement data transmission from the direction switchable camera 193 to the body; and the power supply circuit may be formed, to implement power supply from the body to the direction switchable camera 193. In the backward direction mode, the first switching circuit may be connected to the Pogo pin header (B2 as shown in (b) in FIG. 11) whose definition is the data plus D+ and a second port that is on the ISP and that corresponds to the data minus D-, and may be further connected to the Pogo pin header (B4 as shown in (b) in FIG. 11) whose definition is the data minus D- and the first port that is on the ISP and that corresponds to the data plus D+. In this way, it means that the two Pogo pin headers whose original definitions are the data plus D+ and the data minus D- are reused, but functions of the two Pogo pin headers are exchanged.

It should be noted that a position correspondence between the five Pogo pin interfaces and the five Pogo pin headers that are shown in (a) in FIG. 11 is a first correspondence, and a position correspondence between the five Pogo pin interfaces and the five Pogo pin headers that are shown in (b) in FIG. 11 is a second correspondence.

In this embodiment of this application, definitions of the Pogo pin interfaces on a side of the body of the electronic device, and definitions of the Pogo pin headers on a side of the direction switchable camera are modified, and the first switching circuit is added between the Pogo pin headers on a side of the direction switchable camera and the ISP, so that when the direction switchable camera is in the forward direction mode and the backward direction mode, the two Pogo pin headers whose definitions are the data plus D+ and the data minus D- on a side of the direction switchable camera can be reused after exchange of functions. In this way, both the body and the direction switchable camera in the forward direction mode or the backward direction mode can be aligned with and connected to the Pogo pin interfaces that are sorted in a same sequence and with a same actual function and the Pogo pin headers that are sorted in a same sequence and with a same actual function. Further, the direction switchable camera may perform switching photographing in a forward direction and a backward direction on the body of the electronic device, to expand a photographing range and satisfy more photographing requirements.

### Embodiment 4

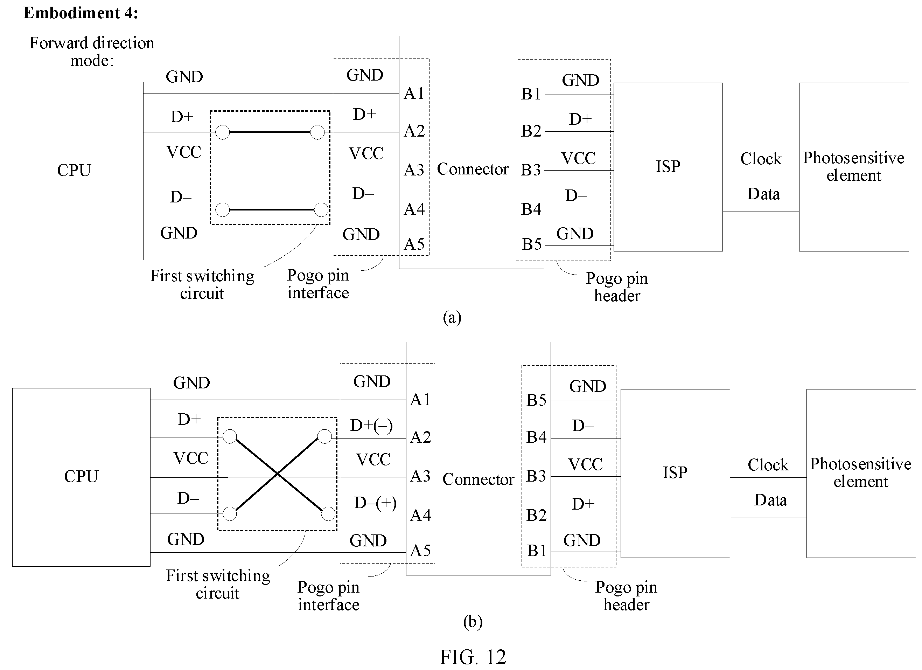

FIG. 12 is a schematic structural diagram of another electronic device according to an embodiment of this application.

In an embodiment, on a side of a body of an electronic device 100, using a first group of definitions in Table 2 as an example, definitions corresponding to five Pogo pin interfaces disposed along a first sorting direction are respectively a ground end GND, a data plus D+, a data minus D-, a positive electrode of a power supply VCC, and the ground end GND in sequence, and are configured to be aligned with and connected to Pogo pin headers having the same definition one by one. The other end of each of at least two Pogo pin interfaces whose definitions are the data plus D+ and the data minus D- are connected to a CPU in the body 101 through a first switching circuit. For example, the first sorting direction is a direction from a 1^{st} Pogo pin interface to a 5^{th} Pogo pin interface.

When a direction switchable camera 193 is in a forward direction mode, on a side of the direction switchable camera 193, definitions corresponding to the five Pogo pin headers disposed along the first sorting direction are respectively the ground end GND, the data plus D+, the data minus D-, the positive electrode of the power supply VCC, and the ground end GND in sequence; and the other end of each Pogo pin header is separately connected to an ISP in the direction switchable camera 193. The ground end GND may not be connected to the ISP. This is not limited in this embodiment of this application.

It should be understood that the first switching circuit may include a plurality of switching switches, and the plurality of switching switches may implement a case in which a switching connection is performed between different Pogo pin interfaces and a same port on a CPU.

After the direction switchable camera 193 in the forward direction mode is aligned with and connected to the body one by one through the foregoing five Pogo pin interfaces (A1 to A5 as shown in (a) in FIG. 12) are respectively and the foregoing five Pogo pin headers (B1 to B5 as shown in (a) in FIG. 12), a data transmission circuit may be formed, to implement data transmission from the direction switchable camera 193 to the body; and a power supply circuit may be formed, to implement power supply from the body to the direction switchable camera 193. In the forward direction mode, the first switching circuit may be connected to a Pogo pin interface (A2 as shown in (a) in FIG. 12) whose definition is the data plus D+ and a first port that is on the CPU and that corresponds to the data plus D+, and may be further connected to a Pogo pin interface (A4 as shown in (a) in FIG. 11) whose definition is the data minus D- and a second port that is on the CPU and that corresponds to the data minus D-.

When the direction switchable camera 193 is in a backward direction mode, on a side of the direction switchable camera 193, after a sequence of the five Pogo pin headers is reversed, along the first sorting direction, the definitions corresponding to the five Pogo pin headers are respectively the ground end GND, the data minus D-, the positive electrode of the power supply VCC, the data plus D+, and the ground end GND in sequence.

After the direction switchable camera 193 in the backward direction mode is aligned with and connected to the body one by one through the foregoing five Pogo pin interfaces (A1 to A5 as shown in (b) in FIG. 12) and the foregoing five Pogo pin headers (B5 to B1 as shown in (b) in FIG. 12), the data transmission circuit may be formed, to implement data transmission from the direction switchable camera 193 to the body; and the power supply circuit may be formed, to implement power supply from the body to the direction switchable camera 193. In the backward direction mode, the first switching circuit may be connected to the Pogo pin interface (A2 as shown in (a) in FIG. 12) whose definition is the data plus D+ and the second port that is on the CPU and that corresponds to the data minus D-, and may be further connected to the Pogo pin interface (A4 as shown in (a) in FIG. 12) whose definition is the data minus D- and the first port that is on the CPU and that corresponds to the data plus D+. In this way, it means that the two Pogo pin interfaces whose original definitions are the data plus D+ and the data minus D- are reused, but functions of the two Pogo pin headers are exchanged.

It should be noted that a position correspondence between the five Pogo pin interfaces and the five Pogo pin headers that are shown in (a) in FIG. 12 is a first correspondence, and a position correspondence between the five Pogo pin interfaces and the five Pogo pin headers that are shown in (b) in FIG. 12 is a second correspondence.

In this embodiment of this application, definitions of the Pogo pin interfaces on a side of the body of the electronic device, and definitions of the Pogo pin headers on a side of the direction switchable camera are modified, and the first switching circuit is added between the Pogo pin interfaces on a side of the electronic device and the CPU, so that when the direction switchable camera is in the forward direction mode and the backward direction mode, the two Pogo pin headers whose definitions are the data plus D+ and the data minus D- on a side of the body can be reused after exchange of functions. In this way, the body and the direction switchable camera in the forward direction mode or the backward direction mode can be aligned with and connected to the Pogo pin interfaces that are sorted in a same sequence and with a same actual function and the Pogo pin headers that are sorted in a same sequence and with a same actual function. Further, the direction switchable camera may perform switching photographing in a forward direction and a backward direction on the body of the electronic device, to expand a photographing range and satisfy more photographing requirements.

### Implementation 3

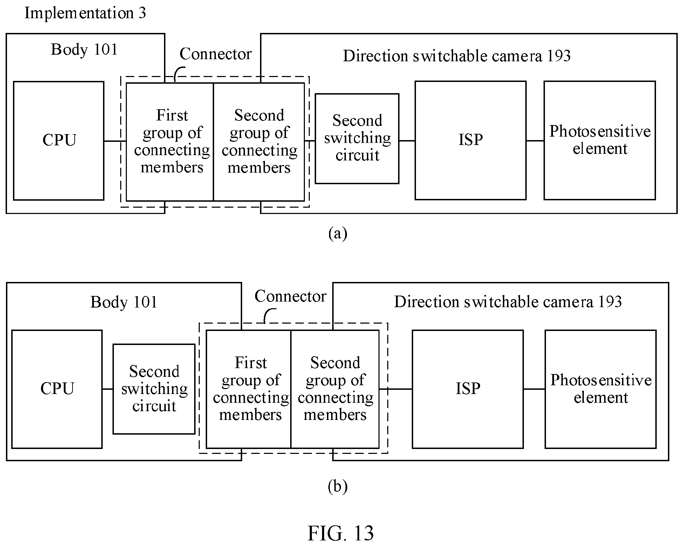

FIG. 13 is a schematic structural diagram of another electronic device according to an embodiment of this application.

As shown in FIG. 13, an embodiment of this application provides an electronic device 100, including a split body and a direction switchable camera 193. The body is aligned with and connected to, through a first group of connecting members that are disposed, a second group of connecting members disposed on the direction switchable camera 193, to perform data transmission and supply power, where both the first group of connecting members and the second group of connecting members include a plurality of connecting members, and functions of at least some of the connecting members are the same when alignment and connection are performed; when the first group of connecting members are aligned with and connected to the second group of connecting members based on a first correspondence, the body is connected to the direction switchable camera 193 and the direction switchable camera 193 faces toward a first direction; and when the first group of connecting members are aligned with and connected to the second group of connecting members based on a second correspondence, the body is connected to the direction switchable camera 193 and the direction switchable camera 193 faces toward a second direction.

Specifically, after the first group of connecting members are aligned with and connected to the second group of connecting members, a CPU in the body is connected to an ISP in the direction switchable camera 193, to implement data transmission and supply power.

Optionally, the connecting members in the first group of connecting members are Pogo pin interfaces, and the connecting members in the second group of connecting members are Pogo pin headers.

Optionally, when a quantity of the connecting members included in the first group of connecting members is four, the electronic device 100 further includes a second switching circuit; when the second switching circuit is disposed in direction switchable camera 193, the second group of connecting members are connected to, through the second switching circuit, the ISP included in the direction switchable camera 193, where the second switching circuit is configured to switch a function of each connecting member in the second group of connecting members when the first group of connecting members are aligned with and connected to the second group of connecting members based on the first correspondence and the second correspondence; and when the second switching circuit is disposed in the body of the electronic device 100, the first group of connecting members are connected to, through the second switching circuit, a processor included in the body 101, where the second switching circuit is configured to switch a function of each connecting member in the first group of connecting members when the first group of connecting members are aligned with and connected to the second group of connecting members based on the first correspondence and the second correspondence.

Optionally, when the quantity of the connecting members included in the first group of connecting members is four, the first group of connecting members and the second group of connecting members are arranged in a same manner, and are arranged at equal intervals in at least one of the following manners: a rhombus (as shown in (h) in FIG. 16) and a straight line (as shown in (i) in FIG. 16). In this embodiment of this application, when the first group of connecting members and the second group of connecting members are arranged in the straight line, a thicknesses of the body 101 of the electronic device and a thicknesses of the direction switchable camera 193 may be designed to be thinner.

For example, using (h) and (i) in FIG. 16 as an example, the first direction is opposite to the second direction, or a difference between the first direction and the second direction is 180°.

For example, using (h) in FIG. 16 as an example, a difference between the first direction and the second direction may be 90°, 180°, and 270°. In this case, a fifth switching circuit may be further added on a side of the body 101 of the electronic device or a side of the direction switchable camera 193, and is configured to switch a function of each connecting member in the first group of connecting members or the second group of connecting members when the first group of connecting members are aligned with and connected to the second group of connecting members based on the first correspondence and the second correspondence. For descriptions of the fifth switching circuit, refer to subsequent descriptions of the second switching circuit. Details are not described herein again.

In this embodiment of this application, when both the first group of connecting members and the second group of connecting members are arranged in the manner shown in (h) in FIG. 16, the direction switchable camera 193 may implement switching in more directions. Optionally, a rotation controller may be further disposed in the electronic device, to control the direction switchable camera 193 to automatically rotate, so that switching in the foregoing different directions is implemented.

An example in which the body 101 of the electronic device is aligned with and connected to the direction switchable camera 193 through four Pogo pin interfaces and four Pogo pin headers is used below. The four Pogo pin interfaces are located on the body 101 of the electronic device, and the four Pogo pin headers are located on the direction switchable camera 193. In addition, the four Pogo pin interfaces are arranged in the straight line, and correspondingly, the four Pogo pin headers are also arranged in the straight line.

Optionally, in an implementation, on a side of the body 101 of the electronic device, definitions corresponding to the four Pogo pin interfaces are a ground end GND, a data plus D+, a positive electrode of a power supply VCC, and a data minus D-. A specific sequence may be set according to a requirement. This is not limited in this embodiment of this application. However, on a side of the direction switchable camera 193, a sequence of the definitions of the four Pogo pin headers is the same as a sequence of the definitions of the four Pogo pin interfaces.

The sequence of the definitions of the four Pogo pin interfaces is described below through Table 3.

**Table 3**

| Interface sequence | First group of definitions | Second group of definitions | Third group of definitions | Fourth group of definitions |
|---|---|---|---|---|
| 1 | GND | D+ | VCC | D- |
| 2 | D+ | VCC | D- | GND |
| 3 | VCC | D- | GND | D+ |
| 4 | D- | GND | D+ | VCC |

It should be understood that, in addition to the four manners included in the foregoing Table 3, the sequence of the definitions of the four Pogo pin interfaces may further include another sequence. This is not limited in this embodiment of this application.

### Embodiment 5

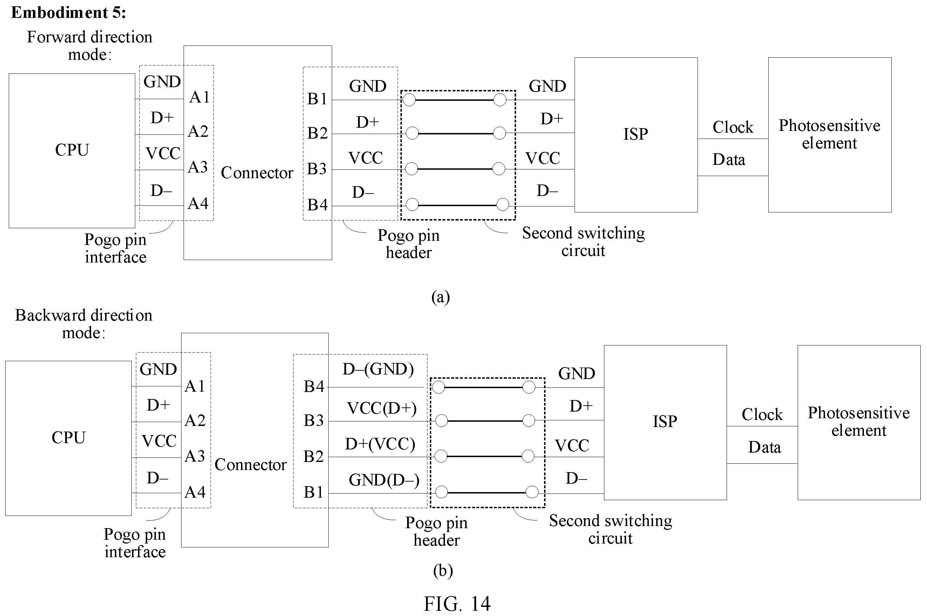

FIG. 14 is a schematic structural diagram of an electronic device according to an embodiment of this application.

In an embodiment, on a side of a body 101 of the electronic device, using a first group of definitions in Table 3 as an example, definitions corresponding to four Pogo pin interfaces disposed along a first sorting direction are respectively a ground end GND, a data plus D+, a data minus D-, and a positive electrode of a power supply VCC in sequence, and are configured to be aligned with and connected to Pogo pin headers having a same definition one by one. In addition, the other end of each Pogo pin interface is separately connected to a CPU in the body 101. For example, the first sorting direction is a direction from a 1^{st} Pogo pin interface to a 4^{th} Pogo pin interface.

When a direction switchable camera 193 is in a forward direction mode, on a side of the direction switchable camera 193, the definitions corresponding to the four Pogo pin headers disposed along the first sorting direction are respectively the ground end GND, the data plus D+, the data minus D-, and the positive electrode of the power supply VCC in sequence, where the other end of each of the four Pogo pin headers is connected to an ISP in the direction switchable camera 193 through a second switching circuit.

It should be understood that the second switching circuit may include a plurality of switching switches, and the plurality of switching switches may implement a case in which a switching connection is performed between different Pogo pin headers and different ports on the ISP.

After the direction switchable camera 193 in the forward direction mode is aligned with and connected to the body 101 one by on through the foregoing four Pogo pin interfaces (A1 to A4 as shown in (a) in FIG. 14) and the foregoing four Pogo pin headers (B1 to B4 as shown in (a) in FIG. 14), a data transmission circuit may be formed, to implement data transmission from the direction switchable camera 193 to the body 101; and a power supply circuit may be formed, to implement power supply from the body 101 to the direction switchable camera 193. In the forward direction mode, the second switching circuit may be connected to a Pogo pin header (B1 as shown in (a) in FIG. 14) whose definition is the ground end GND and a first port that is on the ISP and that corresponds to the ground end GND, may be connected to a Pogo pin header (B2 as shown in (a) in FIG. 14) whose definition is the data plus D+ and a second port that is on the ISP and that corresponds to the data plus D+, and may be further connected to a Pogo pin header (B3 as shown in (a) in FIG. 14) whose definition is the positive electrode of the power supply VCC and a third port that is on the ISP and that corresponds to the positive electrode of the power supply VCC; and the second switching circuit may be connected to a Pogo pin header (B4 as shown in (a) in FIG. 14) whose definition is the data minus D- and a fourth port that is on the ISP and that corresponds to the data minus D-.

When the direction switchable camera 193 is in the backward direction mode, on a side of the direction switchable camera 193, after a sequence of the four Pogo pin headers is reversed, along the first sorting direction, the definitions corresponding to the four Pogo pin headers are respectively the data minus D-, the positive electrode of the power supply VCC, the data plus D+, and the ground end GND in sequence.

After the direction switchable camera 193 in the backward direction mode is aligned with and connected to the body one by one through the foregoing four Pogo pin interfaces (A1 to A4 as shown in (b) in FIG. 14) and the foregoing four Pogo pin headers (B4 to B1 as shown in (b) in FIG. 14), the data transmission circuit may be formed, to implement data transmission from the direction switchable camera 193 to the body 101; and the power supply circuit may be formed, to implement power supply from the body 101 to the direction switchable camera 193. In the backward direction mode, the second switching circuit may be connected to the Pogo pin header (B4 as shown in (b) in FIG. 14) whose definitions is the data minus D- and the first port that is on the ISP and that corresponds to the ground end GND, may be connected to the Pogo pin header (B3 as shown in (b) in FIG. 14) whose definitions is the positive electrode of the power supply VCC and the second port that is on the ISP and that corresponds to the data plus D+ and may be further connected to the Pogo pin header (B2 as shown in (b) in FIG. 14) whose definitions is the data plus D+ and the third port that is on the ISP and that corresponds to the positive electrode of the power supply VCC, and may be further connected to the Pogo pin header (B1 as shown in (a) in FIG. 14) whose definitions is the ground end GND and the fourth port that is on the ISP and that corresponds to the data minus D-. Therefore, it means that the four Pogo pin headers having original definitions are reused, but functions of the four Pogo pin headers are exchanged in a reverse sequence.

In this embodiment of this application, definitions of the Pogo pin interfaces on a side of the body of the electronic device, and definitions of the Pogo pin headers on a side of the direction switchable camera are modified, and the second switching circuit is added between the Pogo pin headers on a side of the direction switchable camera and the ISP, so that when the direction switchable camera is in the forward direction mode and the backward direction mode, the four interfaces defined on a side of the direction switchable camera can be reused after exchange of functions. In this way, the body and the direction switchable camera in the forward direction mode or the backward direction mode can be aligned with and connected to the Pogo pin interfaces with a same actual function and the Pogo pin headers with a same actual function. Further, the direction switchable camera may perform switching photographing in a forward direction and a backward direction on the body of the electronic device, to expand a photographing range and satisfy more photographing requirements.

### Embodiment 6

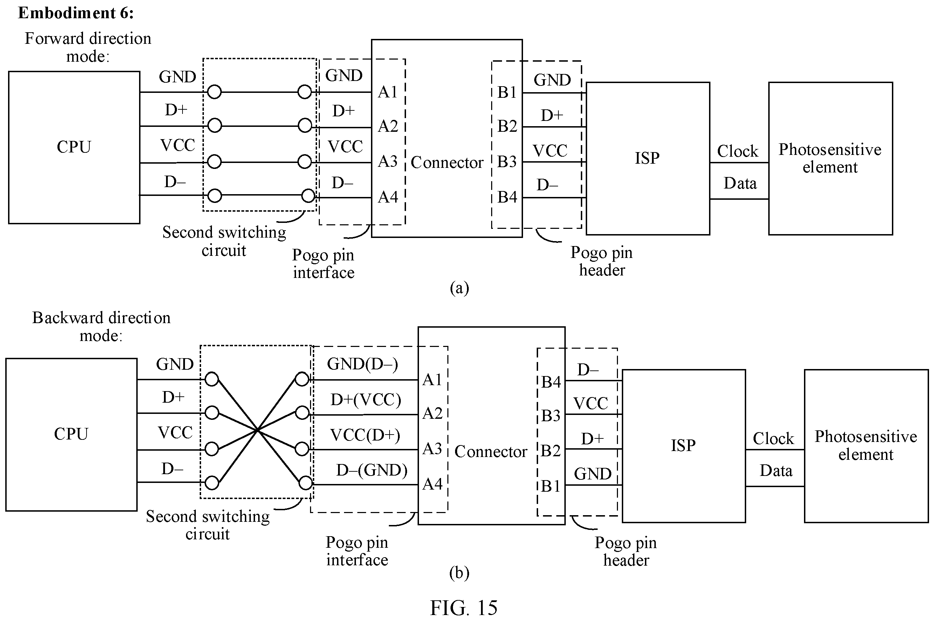

FIG. 15 is a schematic structural diagram of another electronic device according to an embodiment of this application.

In an embodiment, on a side of a body 101 of the electronic device, using a first group of definitions in Table 3 as an example, definitions corresponding to four Pogo pin interfaces disposed along a first sorting direction are respectively a ground end GND, a data plus D+, a data minus D-, and a positive electrode of a power supply VCC in sequence, and are configured to be aligned with and connected to Pogo pin headers having the same definition one by one. In addition, the other end of each Pogo pin interface is separately connected to a CPU in the body 101 through a second switching circuit. For example, the first sorting direction is a direction from a 1^{st} Pogo pin interface to a 4^{th} Pogo pin interface.

When a direction switchable camera 193 is in a forward direction mode, on a side of the direction switchable camera 193, the definitions corresponding to the four Pogo pin headers disposed along the first sorting direction are respectively the ground end GND, the data plus D+, the data minus D-, and the positive electrode of the power supply VCC in sequence; and the other end of each Pogo pin header is separately connected to an ISP in the direction switchable camera 193. The ground end GND may not be connected to the ISP. This is not limited in this embodiment of this application.

It should be understood that the second switching circuit may include a plurality of switching switches, and the plurality of switching switches may implement a case in which a switching connection is performed between different Pogo pin interfaces and a same port on the CPU.

After the direction switchable camera 193 in the forward direction mode is aligned with and connected to the body 101 one by one through the foregoing four Pogo pin interfaces (A1 to A4 as shown in (a) in FIG. 15) and the foregoing four Pogo pin headers (B1 to B4 as shown in (a) in FIG. 15), a data transmission circuit may be formed, to implement data transmission from the direction switchable camera 193 to the body 101; and a power supply circuit may be formed, to implement power supply from the body 101 to the direction switchable camera 193. In the forward direction mode, the second switching circuit may be connected to a Pogo pin interface (A1 as shown in (a) in FIG. 15) whose definition is the ground end GND and a first port that is on the CPU and that corresponds to the ground end GND, may be connected to a Pogo pin interface (A2 as shown in (a) in FIG. 15) whose definition is the data plus D+ and a second port that is on the CPU and that corresponds to the data plus D+, and may be further connected to a Pogo pin interface (A3 as shown in (a) in FIG. 15) whose definition is the positive electrode of the power supply VCC and a third port that is on the CPU and that corresponds to the positive electrode of the power supply VCC; and the second switching circuit may be connected to a Pogo pin interface (A4 as shown in (a) in FIG. 15) whose definition is the data minus D- and a fourth port that is on the CPU and that corresponds to the data minus D-.

When the direction switchable camera 193 is in the backward direction mode, on a side of the direction switchable camera 193, after a sequence of the four Pogo pin headers is reversed, along the first sorting direction, the definitions corresponding to the four Pogo pin headers are respectively the data minus D-, the positive electrode of the power supply VCC, the data plus D+, and the ground end GND in sequence.

When the direction switchable camera 193 is in the backward direction mode, after the direction switchable camera 193 is aligned with and connected to the body 101 one by one through the foregoing four Pogo pin interfaces (A1 to A4 as shown in (b) in FIG. 15) and the foregoing four Pogo pin headers (B4 to B1 as shown in (b) in FIG. 15), the data transmission circuit may be formed, to implement data transmission from the direction switchable camera 193 to the body 101; and the power supply circuit may be formed, to implement power supply from the body 101 to the direction switchable camera 193. In the backward direction mode, the second switching circuit may be connected to a Pogo pin interface (A4 as shown in (b) in FIG. 15) whose definition is the data minus D- and the first port that is on the CPU and that corresponds to the ground end GND, may be connected to the Pogo pin interface (A3 as shown in (b) in FIG. 15) whose definition is the positive electrode of the power supply VCC and the second port that is on the CPU and that corresponds to the data plus D+, may be further connected to the Pogo pin interface (A2 as shown in (b) in FIG. 15) whose definition is the data plus D+ and the third port that is on the CPU and that corresponds to the positive electrode of the power supply VCC, and may be connected to the Pogo pin interface (A1 as shown in (a) in FIG. 15) whose definition is the ground end GND and a fourth port that is on the CPU and that corresponds to the data minus D-. In this way, it means that the four Pogo pin interfaces having original definitions are reused, but functions of the four Pogo pin interfaces are exchanged in a reverse sequence.

In this embodiment of this application, definitions of the Pogo pin interfaces on a side of the body of the electronic device, and definitions of the Pogo pin headers on a side of the direction switchable camera are modified, and the second switching circuit is added between the Pogo pin interfaces on a side of the body of the electronic device and the CPU, so that when the direction switchable camera is in the forward direction mode and the backward direction mode, the four Pogo pin interfaces defined on a side of the direction switchable camera can be reused after exchange of functions. In this way, the body and the direction switchable camera in the forward direction mode or the backward direction mode can be aligned with and connected to the Pogo pin interfaces with the same actual function and the Pogo pin headers with the same actual function. Further, the direction switchable camera may perform switching photographing in a forward direction and a backward direction on the body of the electronic device, to expand a photographing range and satisfy more photographing requirements.

Based on the foregoing examples, in implementation 1, as a quantity of pins is large, and large space is needed in hardware, costs are relatively high in this manner. In addition, due to the large quantity of pins, buckling resilience and needed magnetic attraction force are also greater, but no additional components are needs to be added. However, in implementation 2 and implementation 3, as the quantity of pins is reduced, costs are reduced, and the needed magnetic attraction force may be reduced. However, a data selector, namely, the foregoing first switching circuit or the foregoing second switching circuit, needs to be added, resulting in a relatively large quantity of components. Each implementation has respective advantages and disadvantages, and may be selected and set according to a requirement. This is not limited in this application.

In addition, FIG. 17 is a schematic structural diagram of another electronic device according to an embodiment of this application.

The electronic device 100 provided in this embodiment of this application may include a semi-split body 101 and a direction switchable camera 193. A groove may be provided on an upper bezel of the body 101. The direction switchable camera 193 is disposed in the groove, and is connected to a left groove wall and a right groove wall through a rotating shaft. In this way, as shown in (a) and (b) in FIG. 17, when the direction switchable camera 193 performs rotating with the rotating shaft as a center, the direction switchable camera 193 may implement switching between a forward direction and a backward direction.

Using the rotating shaft as an axis of symmetry, two groups of second groups of connecting members are further disposed on the direction switchable camera 193. Quantities of Pogo pin headers included in the two groups of second groups of connecting members are the same, and definitions of Pogo pin headers at upper and lower symmetric positions are the same.

Optionally, the quantities of the two groups of second groups of connecting members may be 7, 5, or 4. In FIG. 17, only seven connecting members are used as an example for descriptions.

When data communication and power transmission are performed between a processor in the body 101 of the electronic device and the Pogo pin headers based on a protocol USB 2.0, the two groups of second groups of connecting members include connecting members whose definitions are a ground end GND, a data plus D+, a data minus D-, and a positive electrode of a power supply VCC.

In this embodiment of this application, on a premise that a quantity of configured cameras is limited, the rotating shaft and the connecting members are added for the direction switchable camera, the first group of connecting members on the body of the electronic device may be aligned with and connected to different groups of second groups of connecting members on the direction switchable camera, to expand a photographing range of the camera and satisfy more photographing requirements.

In this embodiment of this application, "at least one" refers to one or more, and "a plurality of" refers to two or more. "And/or" describes an association relationship for associated objects and represents that three relationships may exist. For example, A and/or B may represent the following cases: Only A exists, both A and B exist, and only B exists. A and B may be singular or plural. The character "/" generally indicates that the related objects before and after are in an "or" relationship. "At least one of the following" or a similar expression thereof refers to any combination of these items, including one item or any combination of a plurality of items. For example, at least one of a, b, and c may represent: a, b, c, a, "a and b", "a and c", "b and c", or "a, b, and c", where a, b, and c may be singular or plural.

A person of ordinary skill in the art may be aware that the units and algorithm steps described in the embodiments disclosed herein can be implemented by a combination of electronic hardware, computer software, and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can clearly understand that for convenience and conciseness of description, the specific working processes of the foregoing system, apparatus, and unit can be understood with reference to the corresponding processes in the foregoing method embodiments, and details are not repeated herein again.

In several embodiments provided in this application, when any function is implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be used as protection scope of the claims.

## Claims

1. An electronic device, comprising a split body and a direction switchable camera, wherein the body is aligned with and connected to, through a first group of connecting members that are disposed, a second group of connecting members disposed on the direction switchable camera, to perform data transmission and supply power, wherein both the first group of connecting members and the second group of connecting members comprise a plurality of connecting members, and functions of at least some of the connecting members are the same when alignment and connection are performed;
when the first group of connecting members are aligned with and connected to the second group of connecting members based on a first correspondence, the body is connected to the direction switchable camera and the direction switchable camera faces toward a first direction; and
when the first group of connecting members are aligned with and connected to the second group of connecting members based on a second correspondence, the body is connected to the direction switchable camera and the direction switchable camera faces toward a second direction.

2. The electronic device according to claim 1, wherein a quantity of the connecting members comprised in the first group of connecting members is at least 7, functions of the plurality of connecting members comprised in the first group of connecting members are centro-symmetrically distributed, and the plurality of connecting members comprised in the first group of connecting members are centro-symmetrically arranged; or a quantity of the connecting members comprised in the second group of connecting members is at least 7, functions of the plurality of connecting members comprised in the second group of connecting members are centro-symmetrically distributed, and the plurality of connecting members comprised in the second group of connecting members are centro-symmetrically arranged.

3. The electronic device according to claim 2, wherein when both the quantity of the connecting members comprised in the first group of connecting members and the quantity of the connecting members comprised in the second group of connecting members are 7, the first group of connecting members and the second group of connecting members are distributed in a same centro-symmetric manner, wherein the centro-symmetric manner is at least one of the following manners: an I-shape, a cellular-shape, an asterisk-shape, and a straight line.

4. The electronic device according to claim 1, wherein when both a quantity of the connecting members comprised in the first group of connecting members and a quantity of the connecting members comprised in the second group of connecting members are 5, the electronic device further comprises a first switching circuit;
when the first switching circuit is disposed in the direction switchable camera, the second group of connecting members are connected to, through the first switching circuit, an ISP comprised in the direction switchable camera, wherein the first switching circuit is configured to switch, when the first group of connecting members are aligned with and connected to the second group of connecting members based on the first correspondence and the second correspondence, functions of at least one pair of connecting members that are centro-symmetrically disposed in the second group of connecting members; and
when the first switching circuit is disposed in the body of the electronic device, the first group of connecting members are connected to, through the first switching circuit, a processor comprised in the body, wherein the first switching circuit is configured to switch, when the first group of connecting members are aligned with and connected to the second group of connecting members based on the first correspondence and the second correspondence, functions of at least one pair of connecting members that are centro-symmetrically disposed in the first group of connecting members.

5. The electronic device according to claim 2, wherein the first group of connecting members and the second group of connecting members are arranged in a same manner, and are arranged at equal intervals in at least one of the following manners: an X-shape, an asterisk-shape, and a straight line.

6. The electronic device according to claim 1, wherein when both a quantity of the connecting members comprised in the first group of connecting members and a quantity of the connecting members comprised in the second group of connecting members are 4, the electronic device further comprises a second switching circuit;
when the second switching circuit is disposed in the direction switchable camera, the second group of connecting members are connected to, through the second switching circuit, an ISP comprised in the direction switchable camera, wherein the second switching circuit is configured to switch a function of each connecting member in the second group of connecting members when the first group of connecting members are aligned with and connected to the second group of connecting members based on the first correspondence and the second correspondence; and
when the second switching circuit is disposed in the body of the electronic device, the first group of connecting members are connected to, through the second switching circuit, a processor comprised in the body, wherein the second switching circuit is configured to switch a function of each connecting member in the first group of connecting members when the first group of connecting members are aligned with and connected to the second group of connecting members based on the first correspondence and the second correspondence.

7. The electronic device according to claim 6, wherein the first group of connecting members and the second group of connecting members are arranged in a same manner, and are arranged at equal intervals in at least one of the following manners: a rhombus and a straight line.

8. The electronic device according to any one of claims 1 to 7, wherein when the first group of connecting members are aligned with and connected to the second group of connecting members, the connecting members having the same function comprise at least a ground end, a positive electrode of a power supply, a data plus, and a data minus.

9. The electronic device according to any one of claims 1 to 8, wherein the first direction is opposite to the second direction.

10. The electronic device according to any one of claims 1 to 9, wherein the direction switchable camera also comprises a housing, the second group of connecting members are aligned with and connected to the first group of connecting members through a through hole on a bottom surface of the housing, and magnetic connecting members are further disposed on an inner side of the bottom surface of the housing and an upper bezel of the body.

11. The electronic device according to any one of claims 1 to 10, wherein the connecting members in the first group of connecting members are Pogo pin interfaces, and the connecting members in the second group of connecting members are Pogo pin headers.
